# EUROPÄISCHE PATENTSCHRIFT

(11) **EP 3 497 339 B1**
(45) Veröffentlichungstag und Bekanntmachung des Hinweises auf die Patenterteilung: **30.08.2023**
(21) Anmeldenummer: 17737569.8
(22) Anmeldetag: 10.07.2017
(51) Int. Cl.: F16B 12/26

(54) **FEDERVORRICHTUNG UND VERBINDUNGSVORRICHTUNG**
SPRING DEVICE AND CONNECTING DEVICE
DISPOSITIF À RESSORT ET DISPOSITIF DE LIAISON

(30) Priorität: 11.08.2016 DE 102016215037
(43) Veröffentlichungstag der Anmeldung: 19.06.2019
(73) Patentinhaber: Lamello AG, 4416 Bubendorf (CH); Baur, Franz, 87534 Oberstaufen (DE); Haser, Franz Josef, 87534 Oberstaufen (DE)
(72) Erfinder: BAUR, Franz, 87534 Oberstaufen (DE); HASER, Franz Josef, 87534 Oberstaufen (DE); JEKER, Patrick, 4225 Brislach (CH); SEILER, Philipp, 4424 Arboldswil (CH)
(74) Vertreter: DTS Patent- und Rechtsanwälte Schnekenbühl und Partner mbB
(86) Internationale Anmeldenummer: PCT/EP2017/067311
(87) Internationale Veröffentlichungsnummer: WO 2018/028911

(56) Entgegenhaltungen:
- WO-A1-2012/095454
- DE-A1-102013 203 289
- DE-U1- 20 315 778
- DE-U1-202015 100 252
- US-A- 5 333 822

## Beschreibung

Die vorliegende Erfindung betrifft eine Federvorrichtung, welche Bestandteil einer Verbindungsvorrichtung zum Verbinden zweier Objekte ist. Verbindungsvorrichtungen zum Verbinden von Objekten, insbesondere zum Verbinden von Möbel- oder Maschinenbauteilen, sind beispielsweise aus der EP 1 990 549 A1, der DE 20 2015 100 252 U1, der WO 2012/095454 A1 oder der DE 10 2013 203 289 A9 bekannt.

Der vorliegenden Erfindung liegt die Aufgabe zugrunde, eine Verbindungsvorrichtung mit einer Federvorrichtung bereitzustellen, welche einfach aufgebaut ist und die Erzielung von hohen Federkräften und langen Federwegen ermöglicht.

Diese Aufgabe wird erfindungsgemäß durch eine Verbindungsvorrichtung gemäß Anspruch 1 gelöst.

Durch die erfindungsgemäße Kombination aus Federelement und Anlageelement kann vorzugsweise eine optimale elastische Verformung des Federelements erzielt werden, um letztlich besonders hohe Federkräfte und lange Federwege zu ermöglichen.

Das Federelement ist dabei insbesondere reversibel deformierbar.

Ein erstes Ende des Federelements ist insbesondere dem Ende des Federelements, welches relativ zu dem Anlageelement beweglich ist, gegenüberliegend angeordnet.

Günstig kann es sein, wenn das Federelement an dem ersten Ende des Federelements mittelbar oder unmittelbar mit dem Anlageelement verbunden ist. Das erste Ende ist insbesondere ein Ende des Federelements, welches relativ zu dem Anlageelement fixiert ist.

Das relativ zu dem Anlageelement bewegliche Ende des Federelements ist insbesondere ein zweites Ende des Federelements.

Das Federelement ist insbesondere zur Erreichung eines maximal ausgelenkten Zustands an dem Anlageelement angelegt oder anlegbar.

Bei einer Ausgestaltung der Erfindung kann vorgesehen sein, dass das Federelement im Ausgangszustand desselben einen in Richtung des relativ zu dem Anlageelement beweglichen Endes des Federelements stetig zunehmenden und/oder kontinuierlich zunehmenden und/oder überproportional zunehmenden Abstand von dem Anlageelement aufweist.

Es kann vorgesehen sein, dass das Anlageelement eine Anlagefläche zum Anlegen des Federelements umfasst, wobei die Anlagefläche gekrümmt ausgebildet ist. Insbesondere kann vorgesehen sein, dass die Anlagefläche zumindest näherungsweise kreisabschnittsförmig gekrümmt ausgebildet ist.

Vorzugsweise weisen das Anlageelement und/oder das Federelement jeweils einen konstanten Krümmungsradius auf, wobei die zwei Krümmungsradien insbesondere voneinander verschieden sind.

Ferner kann vorgesehen sein, dass das Anlageelement oder das Federelement im Ausgangszustand ungekrümmt und/oder linear ausgebildet ist.

Die Anlagefläche weist vorzugsweise eine Kreisabschnittsform mit stärkerer Krümmung auf als eine an die Anlagefläche anlegbare Oberfläche des Federelements.

Es kann jedoch auch vorgesehen sein, dass eine an die Anlagefläche anlegbare Oberfläche des Federelements eine stärkere Krümmung aufweist als die Anlagefläche.

Die vorstehend genannten Angaben beziehen sich insbesondere auf den Ausgangszustand der Federvorrichtung.

Im ausgelenkten Zustand des Federelements, insbesondere in einem maximal ausgelenkten Zustand des Federelements, weisen die Anlagefläche und eine an die Anlagefläche angelegte Oberfläche des Federelements vorzugsweise eine zumindest näherungsweise identische Krümmung auf. Insbesondere kann hierbei eine im Wesentlichen identische kreisabschnittsförmige Krümmung vorgesehen sein.

Unter einer kreisabschnittsförmigen Krümmung ist insbesondere zu verstehen, dass eine Oberfläche des Federelements, welche an die Anlagefläche anlegbar ist bzw. die Anlagefläche selbst jeweils derart gekrümmt ist, dass die Normalenvektoren der Oberfläche bzw. der Anlagefläche einen gemeinsamen Schnittpunkt oder eine gemeinsame Schnittlinie aufweisen.

Bei einer Ausgestaltung der Erfindung kann vorgesehen sein, dass das Federelement und das Anlageelement einstückig miteinander ausgebildet sind.

Das Federelement und das Anlageelement sind insbesondere als ein einziges Bauteil und/oder in einem gemeinsamen Herstellungsschritt oder Herstellungsverfahren hergestellt oder herstellbar.

Die Federvorrichtung kann beispielsweise ein Kunststoffspritzgussprodukt sein.

Alternativ hierzu kann vorgesehen sein, dass die Federvorrichtung ein Blechumformprodukt ist.

Zudem kann vorgesehen sein, dass die Federvorrichtung ein Kunststoffspritzgussprodukt und/oder ein Blechumformprodukt umfasst.

Beispielsweise kann vorgesehen sein, dass das Federelement ein Blechumformprodukt ist, während das Anlageelement ein Kunststoffspritzgussprodukt ist.

Das Federelement kann beispielsweise in eine Federaufnahme eines Grundkörpers eines Verbindungselements einschiebbar oder eingeschoben oder einsteckbar oder eingesteckt sein. Der Grundkörper umfasst oder bildet vorzugsweise mindestens ein Anlageelement.

Günstig kann es sein, wenn das Federelement flächig an das Anlageelement anlegbar ist.

Insbesondere kann vorgesehen sein, dass das Federelement mit zunehmender Auslenkung aus dem Ausgangszustand in einer größer werdenden Kontaktfläche unmittelbar an dem Anlageelement anliegt, insbesondere ununterbrochen an dem Anlageelement anliegt.

Mit zunehmender Auslenkung des Federelements reduziert sich vorzugsweise eine Länge eines freien und/oder nicht an dem Anlageelement abgestützten Abschnitts des Federelements. Insbesondere eine freie Federlänge des Federelements wird somit vorzugsweise mit zunehmender Auslenkung reduziert. Die Reduktion der Länge des freien und/oder nicht an dem Anlageelement abgestützten Abschnitts des Federelements führt insbesondere zu einer Steigerung der Federkraft.

Das Federelement wird vorzugsweise mit zunehmender Auslenkung auf dem Anlageelement abgerollt.

Eine Kontaktfläche ist insbesondere diejenige Fläche, an welcher das Federelement und das Anlageelement einander berühren.

Die Kontaktfläche ist vorzugsweise in dem Ausgangszustand minimal, insbesondere gleich Null.

Mit beginnender Auslenkung des Federelements aus dem Ausgangszustand ergibt sich vorzugsweise im Bereich des ersten Endes des Federelements eine Kontaktfläche.

Mit zunehmender Auslenkung des Federelements vergrößert sich die Kontaktfläche vorzugsweise längs der Anlagefläche in Richtung des relativ zu dem Anlageelement beweglichen Endes des Federelements, insbesondere ausgehend von dem ersten Ende des Federelements.

Die Kontaktfläche ist vorzugsweise zumindest näherungsweise durchgehend und/oder einfach zusammenhängend ausgebildet. Hierdurch sind insbesondere eine zuverlässige Anlage des Federelements an das Anlageelement und zugleich eine effiziente Spannung des Federelements möglich. Insbesondere kann hierdurch vorzugsweise eine unerwünschte punktuelle oder linienförmige Belastung oder Überlastung des Federelements vermieden werden.

Vorteilhaft kann es sein, wenn eine lokale elastische Verformung des Federelements im ausgelenkten Zustand an sämtlichen Stellen längs einer Kontaktfläche, in welcher das Federelement und das Anlageelement einander berühren, zumindest näherungsweise identisch ist.

Vorteilhaft kann es ferner sein, wenn eine lokale Krümmung des Federelements im ausgelenkten Zustand an sämtlichen Stellen längs einer Kontaktfläche, in welcher das Federelement und das Anlageelement einander berühren, zumindest näherungsweise identisch ist.

Vorteilhaft kann es zudem sein, wenn ein lokales Biegemoment des Federelements im ausgelenkten Zustand an sämtlichen Stellen längs einer Kontaktfläche, in welcher das Federelement und das Anlageelement einander berühren, zumindest näherungsweise identisch ist.

Das Federelement und das Anlageelement sind vorzugsweise derart relativ zueinander festgelegt und/oder derart ausgebildet, dass die vorstehend beschriebenen Abstände und/oder die vorstehend beschriebene Verformung erzielt werden kann.

Unter "zumindest näherungsweise identisch" sind insbesondere Abweichungen im Verformungsgrad von höchstens ungefähr 30%, beispielsweise höchstens ungefähr 20%, insbesondere höchstens ungefähr 10%, zu verstehen.

Erfindungsgemäß liegt bei einem nur teilweisen Relaxieren des Federelements, wodurch ein Arretierzustand, Verriegelungszustand und/oder Rastzustand der Federvorrichtung erzielt werden kann, das Federelement noch abschnittsweise an dem Anlageelement an. Die freie Federlänge des Federelements ist im Arretierzustand, Verriegelungszustand und/oder Rastzustand der Federvorrichtung vorzugsweise verkürzt ausgebildet, insbesondere im Vergleich zu einer freien Federlänge in einem vollständig relaxierten Ausgangszustand.

Es kann vorgesehen sein, dass die Federvorrichtung mehrere Federelemente und/oder mehrere Anlageelemente umfasst.

Ferner kann vorgesehen sein, dass die Federvorrichtung nur ein einziges Federelement und/oder nur ein einziges Anlageelement umfasst.

Das Federelement und das Anlageelement bilden vorzugsweise eine Federeinheit.

Die Federvorrichtung kann vorzugsweise mehrere solcher Federeinheiten umfassen.

Günstig kann es sein, wenn die Federvorrichtung mehrere Federeinheiten umfasst, wobei die Federelemente der Federeinheiten vorzugsweise einander entgegengesetzt verformbar, insbesondere auslenkbar, sind.

Alternativ hierzu kann vorgesehen sein, dass die Federelemente der Federeinheiten eine identische Auslenkrichtung aufweisen.

Es kann vorgesehen sein, dass die Federvorrichtung mehrere Federelemente umfasst, welche nebeneinander oder in Auslenkrichtung hintereinander oder aufeinander an einem Anlageelement anlegbar sind.

Mehrere hintereinander angeordnete Federelemente sind insbesondere als ein Federpaket ausgebildet.

Günstig kann es sein, wenn das relativ zu dem Anlageelement bewegliche Ende des Federelements ein Rastelement und/oder ein Hakenelement aufweist.

Insbesondere kann ein umgebogener und/oder gekrümmter und/oder abgekanteter Endabschnitt des relativ zu dem Anlageelement beweglichen Endes des Federelements vorgesehen sein.

Das Federelement weist vorzugsweise zumindest näherungsweise eine L-Form auf.

Mittels des Rastelements und/oder des Hakenelements kann insbesondere ein Eingriffsabschnitt des Federelements gebildet sein. Mittels eines solchen Eingriffsabschnitts kann insbesondere ermöglicht werden, dass die Federvorrichtung als Bestandteil einer Verbindungsvorrichtung genutzt wird.

Ein Anlageelement der Federvorrichtung kann dabei beispielsweise durch ein Verbindungselement der Verbindungsvorrichtung oder aber durch eines oder beide der miteinander zu verbindenden Objekte gebildet sein.

Günstig kann es sein, wenn die Verbindungsvorrichtung ein Verbindungselement umfasst, welches einen einstückigen Grundkörper aufweist, der die mindestens eine Federvorrichtung umfasst.

Der Grundkörper kann insbesondere ein Kunststoffmaterial und/oder ein metallisches Material umfassen oder aus einem Kunststoffmaterial und/oder einem metallischen Material gebildet sein.

Günstig kann es sein, wenn die Verbindungsvorrichtung ein oder mehrere Verbindungselemente umfasst, welche in einem Verbindungszustand und/oder Verankerungszustand an mindestens einem der Objekte angeordnet sind, wobei mindestens ein Verbindungselement einen oder mehrere nicht-selbstschneidende Haltevorsprünge umfasst, welche jeweils eine gekrümmte Abstützfläche aufweisen, die in einem Längsschnitt kreisbogenförmig ist.

Der eine oder die mehreren Haltevorsprünge sind vorzugsweise in eine an einem der Objekte vorgesehenen Nut mit einer gekrümmten Hinterschneidungsfläche, die in einem Längsschnitt kreisbogenförmig ist, einführbar.

Die Nut umfasst vorzugsweise einen Basisabschnitt und einen oder mehrere sich in einer Dickenrichtung von dem Basisabschnitt weg erstreckende Hinterschneidungsabschnitte.

Der eine oder die mehreren Haltevorsprünge greifen im Verbindungszustand und/oder Verankerungszustand vorzugsweise in den einen oder die mehreren Hinterschneidungsabschnitte der Nut ein.

Günstig kann es sein, wenn die Verbindungsvorrichtung einen oder mehrere Verbindungselemente zur Anordnung an und/oder in einem ersten Objekt und/oder ein oder mehrere Verbindungselemente zur Anordnung an und/oder in einem zweiten Objekt umfasst.

Zur Verbindung der Objekte miteinander ist vorzugsweise mindestens ein Verbindungselement an und/oder in dem ersten Objekt mit dem zweiten Objekt, insbesondere mit mindestens einem Verbindungselement an und/oder in dem zweiten Objekt, in Eingriff bringbar.

Beispielsweise kann vorgesehen sein, dass ein erstes Verbindungselement an und/oder in einem ersten Objekt angeordnet ist. Ein zweites Verbindungselement kann vorzugsweise an und/oder in einem zweiten Objekt angeordnet sein. Es kann jedoch auch vorgesehen sein, dass an dem zweiten Objekt kein Verbindungselement vorgesehen ist. Hierbei ist dann insbesondere eine unmittelbare Festlegung des ersten Verbindungselements an dem zweiten Objekt vorgesehen. Ein zweites Verbindungselement ist dann vorzugsweise entbehrlich.

Das erste Verbindungselement weist vorzugsweise die eine oder die mehreren Federvorrichtungen oder zumindest ein oder mehrere Federelemente der einen oder der mehreren Federvorrichtungen auf. Das zweite Verbindungselement oder das zweite Objekt selbst weist dann vorzugsweise einen oder mehrere Angriffsabschnitte oder Aufnahmeelemente auf, an welchen das eine oder die mehreren zweiten Enden des einen oder der mehreren Federelemente angreifen können.

Eine Federkraft des einen oder der mehreren Federelemente bewirkt vorzugsweise eine Haltekraft zwischen den zwei Objekten, insbesondere zwischen dem ersten Verbindungselement und dem zweiten Verbindungselement oder zwischen dem ersten Verbindungselement und dem zweiten Objekt.

Ein Federelement ist somit insbesondere ein Halteelement.

Die Verbindungsvorrichtung umfasst ferner vorzugsweise mindestens ein Verbindungselement, welches ein Halteelement zum Herstellen einer Verbindung zwischen den zwei Objekten und/oder eine Speichervorrichtung zum Speichern einer Halteenergie des Halteelements umfasst.

Die Speichervorrichtung umfasst insbesondere ein Arretierelement zum Arretieren eines oder mehrerer Federelemente in einem ausgelenkten Zustand.

Mittels des Arretierelements der Speichervorrichtung kann insbesondere die Federkraft in dem einen oder den mehreren Federelementen gespeichert werden.

Vor dem Herstellen einer Verbindung zwischen den zwei Objekten ist der Speichervorrichtung vorzugsweise Halteenergie zuführbar, insbesondere durch Vorspannen/Auslenken des einen oder der mehreren Federelemente.

Die zugeführte Halteenergie ist vorzugsweise bis zum Herstellen der Verbindung mittels der Speichervorrichtung speicherbar. Insbesondere erfolgt die Speicherung der Energie dabei in dem einen oder den mehreren Federelementen.

Günstig kann es sein, wenn die Speichervorrichtung beim Herstellen der Verbindung zwischen den zwei Objekten und/oder zum Herstellen der Verbindung zwischen den zwei Objekten betätigbar ist.

Das Halteelement ist durch diese Betätigung vorzugsweise unter Nutzung der Halteenergie in eine Haltestellung bringbar. Insbesondere kann vorgesehen sein, dass das Halteelement als Federelement ausgebildet ist und aus einem ausgelenkten Zustand in einen zumindest weniger weit ausgelenkten Zustand oder in den Ausgangszustand relaxiert und dabei insbesondere eine kraftschlüssige und/oder formschlüssige Verbindung zwischen den zwei Objekten herstellt.

Ferner kann vorgesehen sein, dass der Speichervorrichtung, insbesondere einem oder mehreren Federelementen, vor, während und/oder nach dem Einbauen des Verbindungselements in das Objekt Halteenergie zuführbar ist.

Die erfindungsgemäße Verbindungsvorrichtung eignet sich insbesondere zum Verbinden zweier Objekte.

Die vorliegende Erfindung betrifft daher auch ein Verfahren zum Verbinden zweier Objekte, insbesondere von Möbel- oder Maschinenteilen.

Das erfindungsgemäße Verfahren umfasst vorzugsweise Folgendes:
Bereitstellen einer erfindungsgemäßen Verbindungsvorrichtung;
Anordnen eines Verbindungselements an einem der Objekte oder Einbringen eines Verbindungselements in eines der Objekte;
Verbinden des Verbindungselements mit dem weiteren Objekt, insbesondere mit einem an und/oder in dem weiteren Objekt angeordneten weiteren Verbindungselement.
Zum Verbinden des Verbindungselements mit dem weiteren Objekt wird insbesondere eine Federvorrichtung der Verbindungsvorrichtung betätigt.

Die vorliegende Erfindung betrifft ferner ein Verfahren zur Herstellung einer Federvorrichtung und/oder einer Verbindungsvorrichtung, welche eine Federvorrichtung umfasst.

Der Erfindung liegt diesbezüglich die Aufgabe zugrunde, ein Verfahren bereitzustellen, mittels welchem eine Verbindungsvorrichtung einfach herstellbar ist, wobei vorzugsweise zudem hervorragende Federeigenschaften erzielt werden sollen.

Diese Aufgabe wird erfindungsgemäß durch ein Verfahren zur Herstellung einer erfindungsgemäßen Verbindungsvorrichtung gelöst, wobei das Verfahren vorzugsweise Folgendes umfasst:
Bereitstellen eines Blechstreifens, welcher mindestens eine U-förmige Materialausnehmung, insbesondere Stanzung, aufweist, so dass ein von der U-förmigen Materialausnehmung, insbesondere Stanzung, umgebener mittiger Abschnitt und ein die U-förmige Materialausnehmung, insbesondere Stanzung, umgebender Stegabschnitt des Blechstreifens gebildet sind;
Herausbiegen des mittigen Abschnitts zur Ausbildung eines Federelements; plastisches Umformen des Stegabschnitts derart, dass ein oder zwei seitlich von dem Federelement wegragende Haltevorsprünge gebildet sind, welche in einem Längsschnitt insbesondere kreisabschnittsförmig sind;
und/oder plastisches Umformen eines Endes des Blechstreifens derart, dass das Ende des Blechstreifens auf den Blechstreifen zurück umgebogen und insbesondere an einem Übergangsabschnitt festgelegt wird, wobei der Übergangsabschnitt den mittigen Abschnitt mit dem Stegabschnitt verbindet.

Ein von dem Übergangsabschnitt wegragender Teil des umgeformten Endes des Blechstreifens wird vorzugsweise gekrümmt ausgebildet.

Mittels des Endes des Blechstreifens wird vorzugsweise ein Anlageelement zum Anlegen des durch den mittigen Abschnitt gebildeten Federelements gebildet.

Das Ende des Blechstreifens ist insbesondere in die im Stegabschnitt des Blechstreifens durch das Herausbiegen des mittigen Abschnitts gebildete Öffnung einsteckbar und/oder darin festlegbar.

Günstig kann es sein, wenn der Stegabschnitt, insbesondere die Öffnung im Stegabschnitt, ein oder mehrere Rastelemente und/oder Klemmelemente zum Festlegen des Endes des Blechstreifens umfasst.

Beispielsweise können die Rastelemente oder Klemmelemente durch in die Öffnung hineinragende Vorsprünge gebildet sein.

Ein freies Ende des Federelements wird vorzugsweise gebogen oder abgekantet. Insbesondere ist hierdurch vorzugweise ein Eingriffsabschnitt des Federelements herstellbar. Der Eingriffsabschnitt ist insbesondere ein Rastelement oder Hakenelement.

Vorzugsweise ist der Blechstreifen spiegelsymmetrisch bezüglich einer Quermittelebene ausgebildet und umfasst insbesondere zwei U-förmige Materialausnehmungen, insbesondere Stanzungen, und zwei Enden, so dass letztlich zwei Federelemente und zwei Anlageelemente gebildet werden können.

Die Federelemente sind insbesondere in einander abgewandte Auslenk-richtungen auslenkbar.

Der Blechstreifen weist vorzugsweise eine zumindest näherungsweise konstante Dicke von beispielsweise mindestens ungefähr 0,5 mm und/oder höchstens ungefähr 1,5 mm auf. Vorzugsweise beträgt eine Dicke des Blechstreifens zumindest näherungsweise 0,8 mm.

Eine Breite des Blechstreifens beträgt vorzugsweise im Bereich der U-förmigen Materialausnehmung und somit im Bereich des mittigen Abschnitts und des Stegabschnitts mindestens ungefähr 8 mm, beispielsweise ungefähr 10 mm.

Das eine oder die beiden Enden des Blechstreifens weisen vorzugsweise eine Breite von mindestens ungefähr 5 mm und/oder höchstens ungefähr 8 mm, beispielsweise ungefähr 6,8 mm, auf.

Der Blechstreifen ist vorzugsweise im Bereich der einen oder der zwei U-förmigen Materialausnehmungen breiter als im Bereich des einen oder der beiden Enden.

Eine Breite eines oder beider Federelemente, welche durch den einen oder die beiden mittigen Abschnitte gebildet sind, entspricht vorzugsweise zumindest näherungsweise der Breite des Blechstreifens an dem einen oder den beiden Enden.

Durch die unterschiedliche Breite des Blechstreifens können insbesondere ein oder mehrere Haltevorsprünge zur Verankerung der Federvorrichtung und/oder des Verbindungselements der Verbindungsvorrichtung in einer entsprechenden Nut gebildet werden.

Weitere bevorzugte Merkmale und/oder Vorteile der vorliegenden Erfindung sind Gegenstand der nachfolgenden Beschreibung und der zeichnerischen Darstellung von Ausführungsbeispielen.
- Fig. 1: eine schematische perspektivische Darstellung zweier Bauteile, welche mittels einer Verbindungsvorrichtung miteinander verbindbar sind und hierzu zwei Nuten mit Hinterschneidungsabschnitten umfassen;
- Fig. 2: eine teiltransparente Darstellung der Bauteile aus Fig. 1;
- Fig. 3: einen schematischen Querschnitt durch eines der Bauteile aus Fig. 1;
- Fig. 4: eine schematische teiltransparente Seitenansicht des Bauteils aus Fig. 3;
- Fig. 5: einen schematischen Längsschnitt durch zwei Bauteile und zwei Verbindungselemente einer bekannten Verbindungsvorrichtung zum Verbinden der beiden Bauteile, in einem getrennten Zustand der Bauteile;
- Fig. 6: eine der Fig. 5 entsprechende schematische Schnittdarstellung der Bauteile und der Verbindungsvorrichtung aus Fig. 5, in einem Zwischenzustand zwischen dem getrennten Zustand und einem verbundenen Zustand;
- Fig. 7: eine der Fig. 5 entsprechende schematische Schnittdarstellung der Bauteile und der Verbindungsvorrichtung aus Fig. 5, in einem verbundenen Zustand der Bauteile und der Verbindungselemente der Verbindungsvorrichtung;
- Fig. 8: eine schematische perspektivische Darstellung des ersten Verbindungselements der Verbindungsvorrichtung aus Fig. 5;
- Fig. 9: eine schematische perspektivische Darstellung des zweiten Verbindungselements der Verbindungsvorrichtung aus Fig. 5;
- Fig. 10: eine schematische Seitenansicht einer bevorzugten Ausführungsform einer erfindungsgemäßen Verbindungsvorrichtung, bei welcher zwei an Anlageelemente anlegbare Federelemente vorgesehen sind, wobei die Federelemente in einem Ausgangszustand vorliegen;
- Fig. 11: eine der Fig. 10 entsprechende schematische Darstellung der erfindungsgemäßen Verbindungsvorrichtung aus Fig. 10, wobei die Federelemente geringfügig ausgelenkt wurden;
- Fig. 12: eine der Fig. 10 entsprechende schematische Darstellung der erfindungsgemäßen Verbindungsvorrichtung aus Fig. 10, wobei die Federelemente etwas weiter ausgelenkt wurden als in Fig. 11;
- Fig. 13: eine der Fig. 10 entsprechende schematische Darstellung der erfindungsgemäßen Verbindungsvorrichtung aus Fig. 10, wobei die Federelemente in einer maximal ausgelenkten Stellung angeordnet sind;
- Fig. 14: eine weitere alternative Ausführungsform einer erfindungsgemäßen Verbindungsvorrichtung, bei welcher ein als Blechumformprodukt ausgebildetes Verbindungselement vorgesehen ist;
- Fig. 15: eine schematische Seitenansicht der erfindungsgemäßen Verbindungsvorrichtung aus Fig. 14;
- Fig. 16: eine weitere schematische Seitenansicht des Verbindungselements aus Fig. 15, mit Blickrichtung in Richtung des Pfeiles 16 in Fig. 15;
- Fig. 17: eine schematische Draufsicht von oben auf das Verbindungselement aus Fig. 15, mit Blickrichtung in Richtung des Pfeiles 17 in Fig. 15; und
- Fig. 18: eine schematische Draufsicht auf einen Blechstreifen zur Herstellung des Verbindungselements der erfindungsgemäßen Verbindungsvorrichtung aus Fig. 14.
Gleiche oder funktional äquivalente Elemente sind in sämtlichen Figuren mit denselben Bezugszeichen versehen.

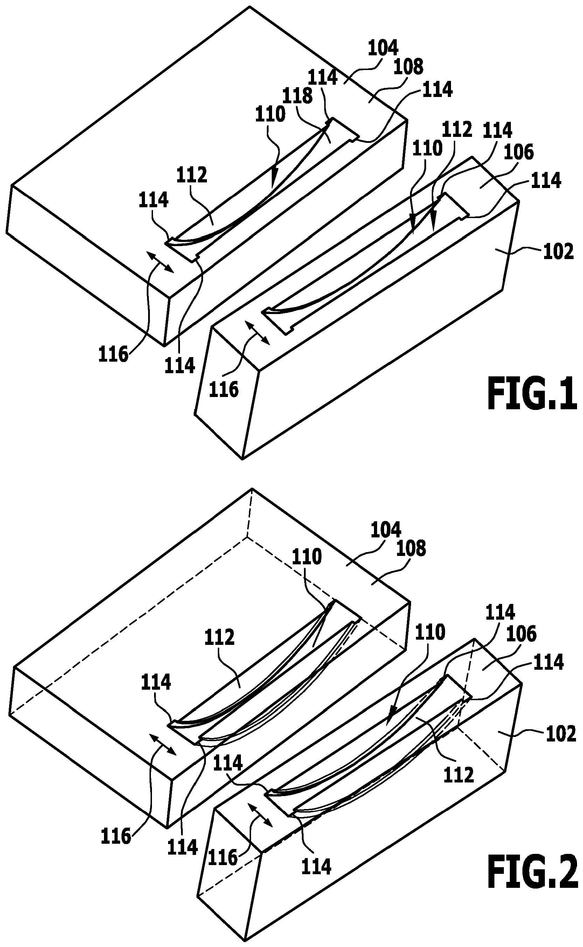

Eine als Ganzes mit 100 bezeichnete Verbindungsvorrichtung dient beispielsweise der Verbindung eines ersten, im Wesentlichen plattenförmigen Bauteils 102 mit einem zweiten, ebenfalls im Wesentlichen plattenförmigen Bauteil 104 (siehe Fig. 1 bis 4).

Die beiden Bauteile 102 und 104 bestehen beispielsweise aus Holz oder Sperrholz, können aber auch aus beliebigen anderen Materialien, beispielsweise aus einem metallischen Material oder einem Kunststoffmaterial (beispielsweise Plexiglas), bestehen. Ferner kann vorgesehen sein, dass das erste Bauteil 102 und das zweite Bauteil 104 aus voneinander verschiedenen Materialien bestehen.

Im verbundenen Zustand der beiden Bauteile 102 und 104 liegt eine eine Schmalseite des ersten Bauteils 102 bildende Kontaktfläche 106 des ersten Bauteils 102 an einer eine Hauptfläche des zweiten Bauteils 104 bildenden Kontaktfläche 108 des zweiten Bauteils 104 an.

An jede der Kontaktflächen 106, 108 mündet jeweils eine in dem betreffenden Bauteil 102 bzw. 104 ausgebildete Nut 110, welche einen kreiszylindersegment- oder kreiszylinderabschnittsförmigen Basisabschnitt 112 und zwei sich in einer Dickenrichtung 116 von dem Basisabschnitt 112 weg erstreckende Hinterschneidungsabschnitte 114 umfasst.

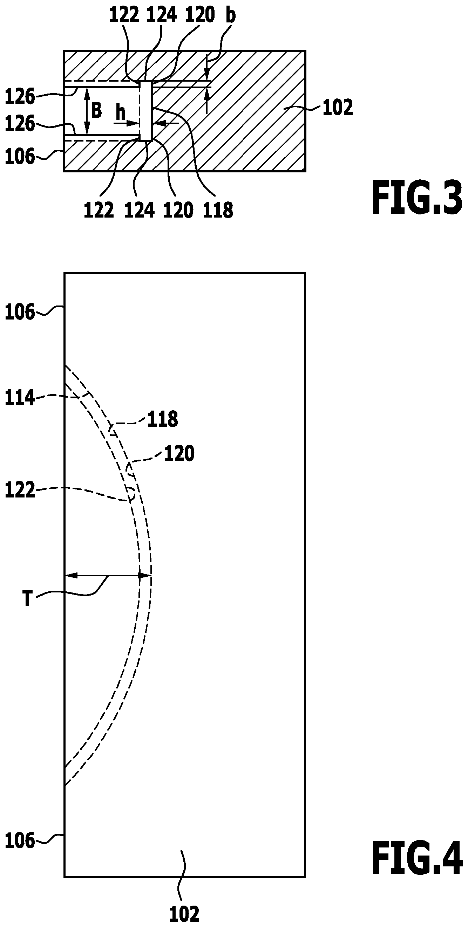

Der Krümmungsradius des Basisabschnitts 112 ist größer als die Nuttiefe T (siehe Fig. 4), so dass die gewölbte Nutgrundfläche 118 die jeweilige Kontaktfläche 106, 108 unter einem spitzen Winkel schneidet.

Der Basisabschnitt 112 der Nut 110 weist in der Dickenrichtung 116 eine Breite B von beispielsweise ungefähr 8 mm auf.

Jeder der Hinterschneidungsabschnitte 114 der Nut 110 wird auf seiner der jeweiligen Kontaktfläche 106 bzw. 108 abgewandten Seite durch eine mit der Nutgrundfläche 118 flächenbündige Grundfläche 120 begrenzt, welche kreiszylindermantelausschnittsförmig ausgebildet ist und denselben Krümmungsradius wie die Nutgrundfläche 118 des Basisabschnitts 112 aufweist.

In der Richtung auf die Kontaktfläche 106 bzw. 108 hin wird jeder Hinterschneidungsabschnitt 114 durch eine ebenfalls kreiszylindermantelausschnittsförmige Hinterschneidungsfläche 122 begrenzt, welche konzentrisch zu der Grundfläche 120 ausgebildet ist und einen kleineren Krümmungsradius aufweist.

Seitlich wird jeder der Hinterschneidungsabschnitte 114 durch eine senkrecht zur jeweiligen Kontaktfläche 106 bzw. 108 verlaufende seitliche Begrenzungsfläche 124 begrenzt.

Die Breite b, das heißt die Erstreckung in der Dickenrichtung 116, beträgt für jeden der Hinterschneidungsabschnitte 114 beispielsweise ungefähr 1 mm.

Die Höhe h, das heißt der Abstand zwischen der Grundfläche 120 und der Hinterschneidungsfläche 122, beträgt für jeden der Hinterschneidungsabschnitte 114 beispielsweise ungefähr 2 mm.

Der Basisabschnitt 112 jeder Nut 110 wird durch im Wesentlichen senkrecht zu der jeweiligen Kontaktfläche 106 bzw. 108 verlaufende seitliche Begrenzungswände 126 begrenzt, welche voneinander den Abstand der Nutbreite B aufweisen.

Um die vorstehend beschriebenen Nuten 110 an den Bauteilen 102 und 104 auszubilden, kann beispielsweise die in der EP 1 990 549 A1 beschriebene Nutfräsvorrichtung verwendet werden.

Zur Verbindung der Bauteile 102, 104 miteinander können in jedem der Bauteile 102, 104 eine oder mehrere Nuten 110, insbesondere Nuten 110 der vorstehend beschriebenen Art, vorgesehen sein.

Es kann jedoch auch vorgesehen sein, dass nur eines der Bauteile 102, 104 mit einer oder mehreren Nuten 110, insbesondere Nuten 110 der vorstehend genannten Art, versehen ist, während das weitere Bauteil 104, 102 keine Nut 110 der vorstehend beschriebenen Art, eine anders ausgebildete Nut 110, eine oder mehrere Bohrungen, eine oder mehrere Vertiefungen, einen oder mehrere Vorsprünge und/oder eine oder mehrere Ausnehmungen umfasst oder unbearbeitet ist.

Verschiedene Ausführungsformen von Verbindungsvorrichtungen 100 zum Verbinden verschiedener Bauteile 102, 104 werden nachfolgend beschrieben.

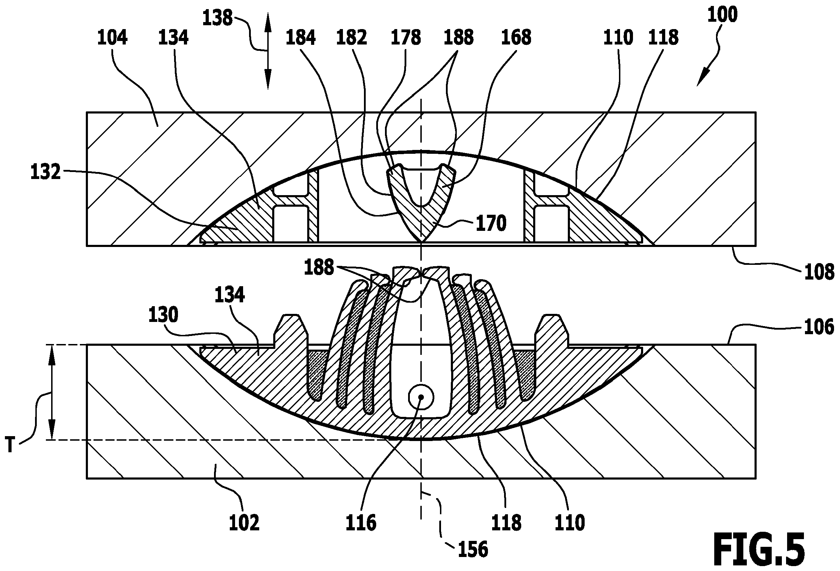

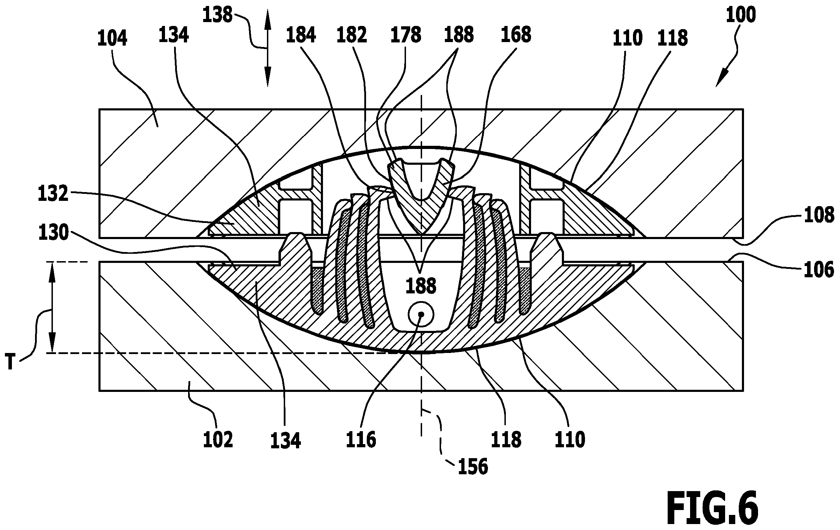

Eine in den Fig. 5 bis 8 dargestellte Ausführungsform einer als Ganzes mit 100 bezeichneten Verbindungsvorrichtung ist aus der DE 10 2013 203 289 A9 bekannt.

Zur Verbindung der Bauteile 102, 104 miteinander umfasst die Verbindungsvorrichtung 100 ein erstes Verbindungselement 130 und ein zweites Verbindungselement 132.

Vorzugsweise umfasst jedes der Verbindungselemente 130, 132 einen Grundkörper 134, welcher im Wesentlichen kreiszylindersegmentförmig oder kreiszylinderabschnittsförmig ausgebildet ist.

Der Grundkörper 134 ist insbesondere zumindest abschnittsweise und zumindest näherungsweise komplementär zu dem Basisabschnitt 112 der Nut 110 ausgebildet.

Jedes der Verbindungselemente 130, 132 umfasst ferner zwei Haltevorsprünge 136, welche sich in der Dickenrichtung 116 von dem komplementär zu dem Basisabschnitt 112 ausgebildeten Abschnitt des Grundkörpers 134 weg erstrecken.

Die Haltevorsprünge 136 sind bogenförmig gekrümmt und zumindest näherungsweise im Wesentlichen komplementär zu den Hinterschneidungsabschnitten 114 der Nut 110 ausgebildet.

Mittels der Haltevorsprünge 136 können die Verbindungselemente 130, 132 somit zumindest bezüglich einer Verbindungsrichtung 138 formschlüssig an den Bauteilen 102, 104, insbesondere in den Nuten 110 der Bauteile 102, 104, festgelegt werden.

Die Verbindungselemente 130, 132 sind hierzu längs der Hinterschneidungsabschnitte 114 in die Nuten 110 der Bauteile 102, 104 einschiebbar.

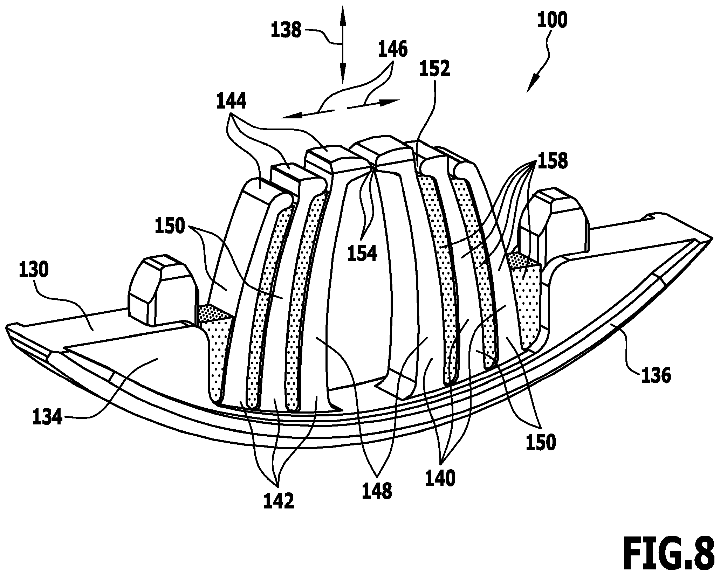

Wie insbesondere Fig. 8 zu entnehmen ist, umfasst das erste Verbindungselement 130 den Grundkörper 134, die Haltevorsprünge 136 und ein oder mehrere Federelemente 140.

Die Federelemente 140 sind beispielsweise Blattfedern.

Jedes Federelement 140 weist ein dem Grundkörper 134 zugewandtes erstes Ende 142 sowie ein dem Grundkörper 134 abgewandtes zweites Ende 144 auf.

Mit dem dem Grundkörper 134 zugewandten Ende 142 eines jeden Federelements 140 ist das Federelement 140 an dem Grundkörper 134 angeordnet, insbesondere einstückig mit dem Grundkörper 134 verbunden.

Das dem Grundkörper 134 abgewandte Ende 144 eines jeden Federelements 140 ist in einer quer, insbesondere im Wesentlichen senkrecht, zur Verbindungsrichtung 138 ausgerichteten Auslenkrichtung 146 beweglich.

Die Federelemente 140 sind hierzu elastisch biegbar ausgebildet.

Bei der in den Fig. 5 bis 8 dargestellten Ausführungsform des ersten Verbindungselements 130 sind zwei Federelemente 140 vorgesehen, welche zur Verbindung der Verbindungselemente 130, 132 in direkten Kontakt mit einem (noch zu beschreibenden) Aufnahmeelement des zweiten Verbindungselements 132 gelangen. Diese Federelemente 140 sind daher Hauptfederelemente 148.

Die weiteren Federelemente 140 sind Hilfsfederelemente 150, welche zur Verbindung der Verbindungselemente 130, 132 nur indirekt, nämlich mittels der Hauptfederelemente 148, mit dem Aufnahmeelement des zweiten Verbindungselements 132 zusammenwirken.

Die Hilfsfederelemente 150 sind benachbart zu den Hauptfederelementen 148 angeordnet und weisen Anlageabschnitte 152 an dem dem Grundkörper 134 abgewandten Ende 144 der Hilfsfederelemente 150 auf, mittels welchen die Hilfsfederelemente 150 an den Hauptfederelementen 148 anlegbar sind, um auf die Hauptfederelemente 148 einwirken zu können.

Die Hauptfederelemente 148 umfassen an dem dem Grundkörper 134 abgewandten Ende 144 der Hauptfederelemente 148 jeweils einen Eingriffsabschnitt 154, mit welchem die Hauptfederelemente 148 zur Verbindung der Verbindungselemente 130, 132 mit dem Aufnahmeelement des zweiten Verbindungselements 132 in Eingriff bringbar sind.

Insbesondere die Eingriffsabschnitte 154 der Hauptfederelemente 148 sind in der Auslenkrichtung 146 auslenkbar, um mit dem Aufnahmeelement des zweiten Verbindungselements 132 in Eingriff gebracht zu werden.

Die Hilfsfederelemente 150 sind auf den den Eingriffsabschnitten 154 abgewandten Seiten der Hauptfederelemente 148 angeordnet.

Die Eingriffsabschnitte 154 der Hauptfederelemente 148 können vorzugsweise in einander entgegengesetzten Auslenkrichtungen 146 von einer Quermittelebene 156 weg bewegt werden. Hierbei wird bewirkt, dass die dem Grundkörper 134 abgewandten Enden 144 der Hilfsfederelemente 150 ebenfalls in den entsprechenden Auslenkrichtungen 146 ausgelenkt werden.

Die zur Auslenkung benötigte Kraft wird durch die zusätzliche Auslenkung der Hilfsfederelemente 150 deutlich erhöht, da die der Auslenkung entgegenwirkende Federkraft zumindest näherungsweise eine Summe der Federkraft des Hauptfederelements 148 und der zugeordneten Hilfsfederelemente 150 ist.

Die Hilfsfederelemente 150 bilden somit Verstärkungselemente 158 zur Verstärkung einer Federwirkung oder Federkraft des Hauptfederelements 148.

Das zweite Verbindungselement 132 umfasst ebenfalls einen Grundkörper 134, welcher zumindest abschnittsweise und zumindest näherungsweise komplementär zu der Nut 110 der Bauteile 102, 104 geformt ist.

Das zweite Verbindungselement 132 umfasst ferner zwei Haltevorsprünge 136, welche bogenförmig ausgebildet und im Wesentlichen komplementär zu den Hinterschneidungsabschnitten 114 der Nut 110 ausgebildet sind.

Auch das zweite Verbindungselement 132 kann somit einfach in eine Nut 110 eingeführt und darin festgelegt werden.

Das zweite Verbindungselement 132 umfasst vorzugsweise ein Aufnahmeelement 168, mittels welchem das zweite Verbindungselement 132 mit dem ersten Verbindungselement 130, insbesondere mit den Federelementen 140 des ersten Verbindungselements 130, in Eingriff bringbar ist.

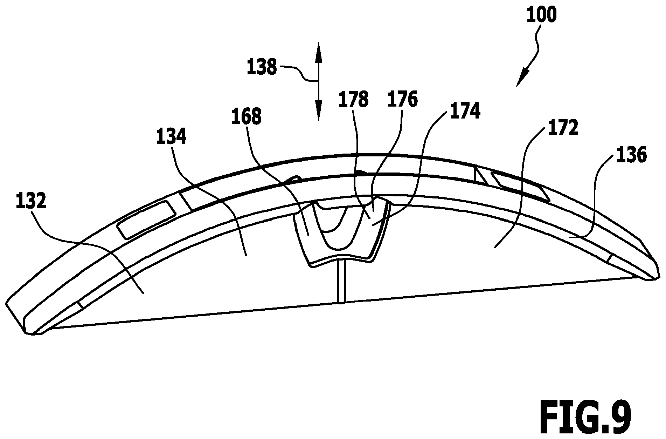

Das Aufnahmeelement 168 ist an einem einer Verbindungsebene 166 zugewandten Ende 170 des Aufnahmeelements 168 an dem Grundkörper 134 angeordnet, insbesondere festgelegt (siehe insbesondere Fig. 5, 7 und 9). Das Aufnahmeelement 168 ist zwischen zwei Seitenwandungen 172 des Grundkörpers 134 des zweiten Verbindungselements 132 angeordnet.

In den Seitenwandungen 172 können Ausnehmungen 174, insbesondere Öffnungen 176, derart vorgesehen sein, dass sich das zwischen den Seitenwandungen 172 erstreckende Aufnahmeelement 168 teilweise längs dieser Ausnehmungen 174 erstreckt und somit in diesem Bereich nicht mit der Seitenwandung 172 und somit nicht mit dem Grundkörper 134 verbunden ist. Diese Ausnehmungen 174 können alternativ hierzu auch entbehrlich sein, so dass durchgängige Seitenwandungen 172 vorgesehen sind.

Das Aufnahmeelement 168 umfasst vorzugsweise zwei Aufnahmevorsprünge 178.

Die Aufnahmevorsprünge 178 des Aufnahmeelements 168 sind insbesondere biegbar oder starr ausgebildet.

Das Aufnahmeelement 168 ist insbesondere mittig in dem zweiten Verbindungselement 132 angeordnet und bezüglich der Quermittelebene 156 des zweiten Verbindungselements 132 spiegelsymmetrisch ausgebildet. Insbesondere sind die Aufnahmevorsprünge 178 des Aufnahmeelements 168 bezüglich der Quermittelebene 156 spiegelsymmetrisch zueinander ausgebildet und spiegelsymmetrisch zueinander angeordnet.

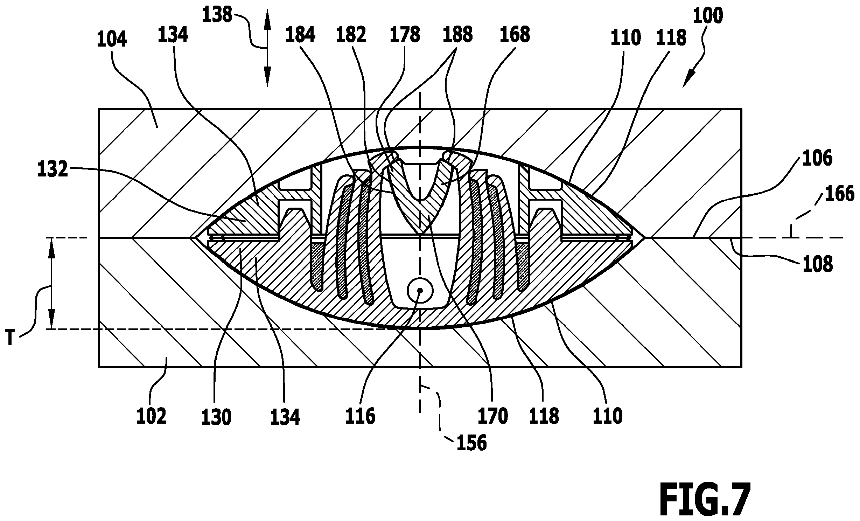

Eine äußere Oberfläche 182 des Aufnahmeelements 168 weist vorzugsweise zumindest näherungsweise eine Parabelform auf, wobei eine x-Achse in der Verbindungsebene 166 und eine y-Achse in der Quermittelebene 156 verläuft (siehe insbesondere Fig. 7).

Längs dieser Oberfläche 182 des Aufnahmeelements 168 werden die Hauptfederelemente 148, insbesondere die Eingriffsabschnitte 154 der Hauptfederelemente 148, beim Verbinden der Verbindungselemente 130, 132 miteinander bewegt. Aufgrund der Parabelform der Oberfläche 182 erfolgt dabei eine zunächst große und anschließend eine geringere Kraftzunahme bei der Auslenkung der Hauptfederelemente 148.

Die Federelemente 140, insbesondere die Hauptfederelemente 148, werden bei der Bewegung längs der Oberfläche 182 des Aufnahmeelements 168 gespannt, so dass die Oberfläche 182 des Aufnahmeelements 168 einen Spannabschnitt 184 des Aufnahmeelements 168 bildet.

Wie insbesondere Fig. 7 zu entnehmen ist, liegen die Eingriffsabschnitte 154 der Hauptfederelemente 148 und das Aufnahmeelement 168 im verbundenen Zustand beispielsweise jeweils mit Schrägflächen 188 aneinander an.

Mittels dieser Schrägflächen 188 kann einerseits bewirkt werden, dass im verbundenen Zustand der Verbindungselemente 130, 132 eine Zugkraft auf die Verbindungselemente 130, 132 ausgeübt wird, welche die Verbindungselemente 130, 132 gegeneinander zieht. Andererseits kann mittels der Schrägflächen 188 vorzugsweise gewährleistet werden, dass die Verbindungselemente 130, 132 beschädigungsfrei voneinander entfernt werden können. Insbesondere können die Hauptfederelemente 148 des ersten Verbindungselements 130 aufgrund der Schrägflächen 188 vorzugsweise entgegen der Verbindungsrichtung 138 an den Schrägflächen 188 des Aufnahmeelements 168 entlanggleiten und hierdurch die Eingriffsabschnitte 154 der Hauptfederelemente 148 mit den Aufnahmevorsprüngen 178 des Aufnahmeelements 168 außer Eingriff gebracht werden.

Bei weiteren (nicht dargestellten) Ausführungsformen der Verbindungsvorrichtung 100 kann beispielsweise eine andere Anzahl von Hauptfederelementen 148 und/oder Hilfsfederelementen 150 vorgesehen sein. Ferner kann bei alternativen Ausführungsformen vorgesehen sein, dass die Hauptfederelemente 148 so ausgebildet und angeordnet sind, dass die Eingriffsabschnitte 154 der Hauptfederelemente 148 einander abgewandt angeordnet und zur Auslenkung der Hauptfederelemente 148 aufeinander zu bewegbar sind. Das zugehörige zweite Verbindungselement 132 umfasst dann vorzugsweise zwei voneinander beabstandete Aufnahmeelemente 168, welche im verbundenen Zustand der Verbindungselemente 130, 132 auf den der Quermittelebene 156 abgewandten Seiten der Hauptfederelemente 148 angeordnet sind.

Die in den Fig. 5 bis 9 dargestellte Ausführungsform der Verbindungsvorrichtung 100 funktioniert wie folgt:
Zunächst werden die Bauteile 102, 104 an den im montierten Zustand der Bauteile 102, 104 einander gegenüberliegenden Stellen mit den Nuten 110 versehen. Insbesondere werden die Nuten 110 mit einem speziellen Werkzeug, welches beispielsweise aus der EP 1 990 549 A1 bekannt ist, in die Bauteile 102, 104 eingefräst.

Die Verbindungselemente 130 bzw. 132 können dann durch einfaches Einschieben in die Nuten 110 eingebracht werden.

Dadurch, dass die Haltevorsprünge 136 der Verbindungselemente 130, 132 bei diesem Einschiebevorgang mit den Hinterschneidungsabschnitten 114 der Nuten 110 in Eingriff gebracht werden, werden die Verbindungselemente 130, 132 zumindest bezüglich einer Bewegung der Verbindungselemente 130, 132 in der Verbindungsrichtung 138 formschlüssig in den Bauteilen 102, 104 festgelegt.

Das erste Verbindungselement 130 wird dabei in dem ersten Bauteil 102 festgelegt.

Dies kann insbesondere dann relevant sein, wenn das erste Bauteil 102 dasjenige Bauteil 102, 104 ist, welches mit seiner Schmalseite oder Stirnseite mit einer Hauptseite eines zweiten Bauteils 104 verbunden werden soll.

Bei der Anordnung der Nuten 110 und somit der Verbindungselemente 130, 132 an den Schmalseiten bzw. Stirnseiten von insbesondere plattenförmigen Bauteilen 102, 104 ist es nämlich in der Regel unkritisch, wenn Teile des ersten Verbindungselements 130, insbesondere die Hauptfederelemente 148 und/oder die Hilfsfederelemente 150, über eine Oberfläche des Bauteils 102, 104, insbesondere eine Kontaktfläche 106, an welcher die Bauteile 102, 104 aneinander anliegen, überstehen.

Das zweite Verbindungselement 132 ist vorzugsweise in einer in der Hauptfläche des zweiten Bauteils 104 angeordneten Nut 110 angeordnet, wobei das zweite Verbindungselement 132 vorzugsweise nicht über die Hauptfläche, insbesondere die Kontaktfläche 106, hinausragt.

Das zweite Bauteil 104 kann somit trotz bereits montiertem zweitem Verbindungselement 132 mittels der Hauptfläche auf weiteren, insbesondere plattenförmigen, Bauteilen 102, 104 gestapelt werden, ohne eine Beschädigung der Bauteile 102, 104 oder des zweiten Verbindungselements 132 befürchten zu müssen.

Zur Verbindung der Verbindungselemente 130, 132 und somit der Bauteile 102, 104 miteinander werden die Bauteile 102, 104 samt den darin angeordneten Verbindungselementen 130, 132 längs der Verbindungsrichtung 138, welche vorzugsweise senkrecht zur Verbindungsebene 166 ist, aufeinander zu bewegt.

Wie insbesondere den Fig. 5 bis 7 zu entnehmen ist, gelangen dabei zunächst die Hauptfederelemente 148 mit dem Aufnahmeelement 168, insbesondere mit dem Spannabschnitt 184 des Aufnahmeelements 168, in Eingriff.

Die Eingriffsabschnitte 154 der Hauptfederelemente 148 werden bei der Bewegung derselben längs des Spannabschnitts 184 des Aufnahmeelements 168 in den Auslenkrichtungen 146 von der Quermittelebene 156 weg bewegt. Die Hauptfederelemente 148 werden dabei ausgelenkt und somit gespannt.

Durch die Auslenkung der Hauptfederelemente 148 werden auch die Hilfsfederelemente 150 ausgelenkt.

Aufgrund der Hilfsfederelemente 150 wird die zum Auslenken der Hauptfederelemente 148 benötigte Kraft und somit auch die Federkraft der Hauptfederelemente 148 verstärkt.

Es muss somit eine deutlich größere Kraft aufgewandt werden, um die Verbindungselemente 130, 132 miteinander zu verbinden, als wenn die Hauptfederelemente 148 ohne die als Verstärkungselemente 158 dienenden Hilfsfederelemente 150 vorgesehen wären.

Aufgrund der Parabelform der Oberfläche 182 des Aufnahmeelements 168 ergibt sich beim Aufschieben des ersten Verbindungselements 130 auf das zweite Verbindungselement 132 zunächst eine zügigere und anschließend eine langsamere Auslenkung der Hauptfederelemente 148.

Insbesondere kann hierdurch eine große Federspannung erzeugt werden, um die Verbindungselemente 130, 132 und somit auch die Bauteile 102, 104 fest miteinander zu verbinden, wobei zugleich eine zum Verbinden der Verbindungselemente 130, 132 benötigte Maximalkraft reduziert wird.

Das Verbinden der Verbindungselemente 130, 132 miteinander wird bei der in den Figuren 5 bis 9 dargestellten Ausführungsform zudem dadurch optimiert, dass die Aufnahmevorsprünge 178 des Aufnahmeelements 168 nachgiebig, insbesondere biegsam, ausgebildet sind. Die Eingriffsabschnitte 154 der Hauptfederelemente 148 können hierdurch einfacher an den Aufnahmevorsprüngen 178 des Aufnahmeelements 168 vorbeibewegt werden.

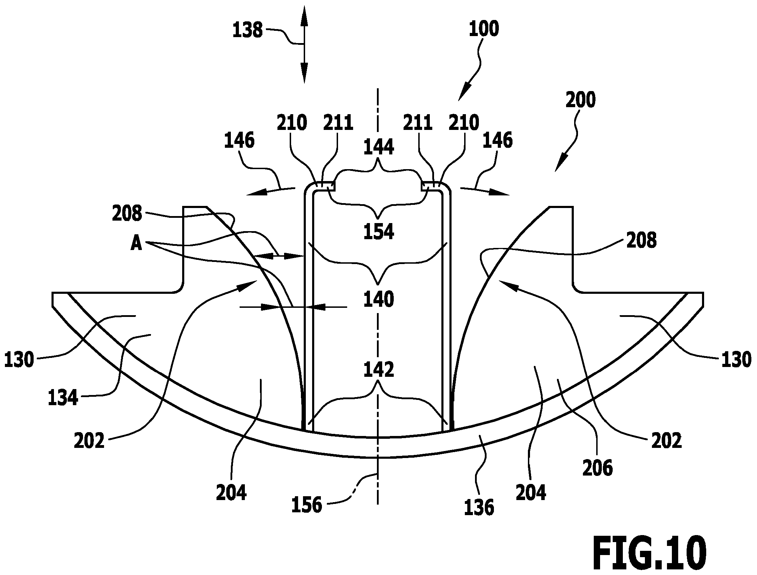

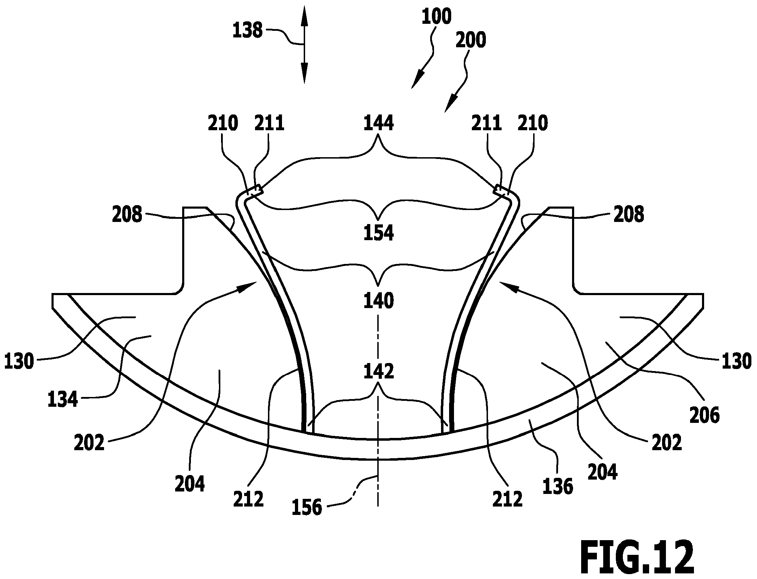

Eine in den Fig. 10 bis 13 dargestellte Ausführungsform einer Verbindungsvorrichtung 100 unterscheidet sich von der in den Fig. 5 bis 9 dargestellten Ausführungsform im Wesentlichen dadurch, dass die Verbindungsvorrichtung 100 eine andere Anordnung von Federelementen 140 umfasst.

Die Verbindungsvorrichtung 100 umfasst dabei eine Federvorrichtung 200, welche zwei Federeinheiten 202 umfasst. Jede Federeinheit 202 wird durch ein Federelement 140 und ein Anlageelement 204 gebildet.

Auch mittels eines Anlageelements 204 kann eine Federkraft des Federelements 140 optimiert werden.

Bei der in den Fig. 10 bis 13 dargestellten Ausführungsform der Verbindungsvorrichtung 100 sind insbesondere keine Hilfsfederelemente vorgesehen.

Die Anlageelemente 204 sind insbesondere starr und unnachgiebig ausgebildet.

Wie insbesondere den Fig. 10 bis 13 zu entnehmen ist, kann die Federvorrichtung 200 insbesondere an dem ersten Verbindungselement 130 der Verbindungsvorrichtung 100 vorgesehen sein.

Insbesondere kann diese Federvorrichtung 200 mit dem Aufnahmeelement 168 des zweiten Verbindungselements 132 gemäß der in den Fig. 5 bis 9 dargestellten Ausführungsform der Verbindungsvorrichtung 100 in Eingriff gebracht werden, um zwei Objekte, insbesondere Bauteile 102, 104, miteinander zu verbinden.

Bei der in den Fig. 10 bis 13 dargestellten Ausführungsform der Verbindungsvorrichtung 100 kann insbesondere vorgesehen sein, dass das erste Verbindungselement 130 einen einstückigen Grundkörper 134 umfasst, welcher als ein Kunststoffspritzgussprodukt 206 ausgebildet ist.

Der Grundkörper 134 umfasst somit insbesondere die beiden Anlageelemente 204 und die beiden Federelemente 140.

In dem in Fig. 10 dargestellten Ausgangszustand der Federelemente 140 sind diese relativ zu dem Anlageelement 204 derart angeordnet und/oder ausgebildet, dass ausgehend von dem ersten Ende 142 eines jeden Federelements 140 in Richtung des jeweiligen zweiten Endes 144 ein Abstand A zu dem jeweils zugehörigen Anlageelement 204 überproportional zunimmt.

Auf der dem jeweiligen Federelement 140 zugewandten Seite eines jeden Anlageelements 204 ist dabei eine Anlagefläche 208 ausgebildet, welche beim Auslenken des jeweiligen Federelements 140 in direkten Kontakt mit demselben kommt.

Die Anlagefläche 208 ist dabei insbesondere kreisabschnittsförmig gekrümmt ausgebildet.

Im Ausgangszustand sind die Federelemente 140 vorzugsweise im Wesentlichen gerade und/oder ungekrümmt ausgebildet.

Lediglich ein Endbereich eines jeden Federelements 140 im Bereich des zweiten Endes 144 kann beispielsweise abgeknickt oder abgekantet oder sonst wie gebogen sein. Hierdurch kann insbesondere ermöglicht werden, dass die Federelemente 140 jeweils einen Eingriffsabschnitt 154 zur Verbindung mit dem weiteren Verbindungselement 132 aufweisen.

Die Eingriffsabschnitte 154 sind dabei insbesondere Rastelemente 210 oder Hakenelemente 211.

Wie insbesondere aus einem Vergleich der Fig. 10 bis 13 hervorgeht, können die Federelemente 140 von der Quermittelebene 156 weg nach außen ausgelenkt werden.

Die Federelemente 140 werden dabei insbesondere in Richtung der Anlageelemente 204 bewegt.

Grundsätzlich ergibt sich bei der Auslenkung von Federelementen 140 eine lokal sehr unterschiedliche Belastung, welche zu lokal sehr unterschiedlichen Verformungsgraden führt.

Ohne die Verwendung eines Anlageelements 204 würde dies bei den Federelementen 140 gemäß der in den Fig. 10 bis 13 dargestellten Ausführungsform einer Verbindungsvorrichtung 100 insbesondere dazu führen, dass die Federelemente 140 im Bereich des jeweiligen ersten Endes 142 besonders stark belastet und entsprechend verformt werden.

Insbesondere im Bereich des zweiten Endes 144 ergäbe sich praktisch keine Verformung.

Ein solches Verformungsverhalten führt insbesondere dazu, dass lediglich eine geringe Federkraft aufgebracht werden kann, bevor eine lokale plastische Verformung oder sonstige Beschädigung des Federelements 140 eintritt.

Durch die Verwendung von Anlageelementen 204 kann hingegen eine optimierte elastische Verformung eines jeden Federelements 140 erzielt werden, um letztlich besonders hohe Federkräfte zu ermöglichen.

Die Federelemente 140 werden hierzu auf den Anlageelementen 204 abgerollt und nehmen dabei im Wesentlichen die Form der Anlagefläche 208 des jeweiligen Anlageelements 204 ein.

Die Federelemente 140 werden somit insbesondere im Wesentlichen kreisabschnittsförmig gebogen.

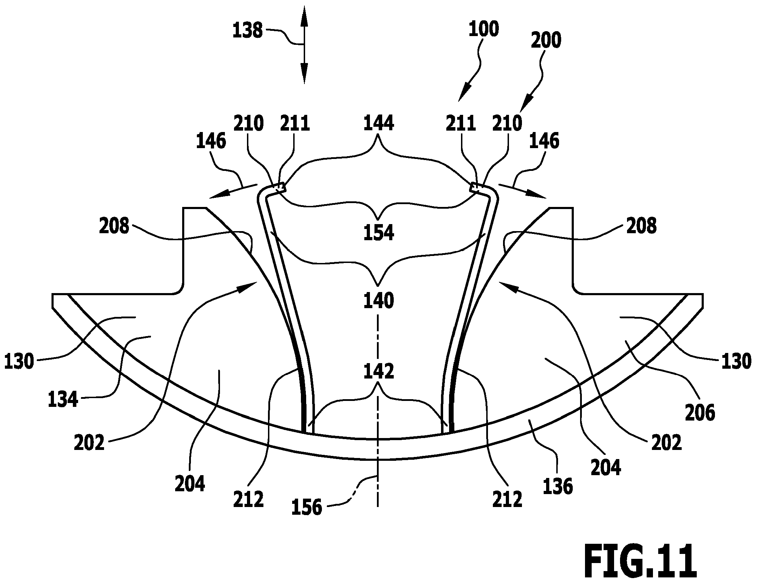

Wie insbesondere den Fig. 11 bis 13 zu entnehmen ist, ergibt sich dabei eine Kontaktfläche 212, welche diejenige Fläche ist, an der das Federelement 140 und das Anlageelement 204 einander berühren.

Diese Kontaktfläche 212 wird mit zunehmender Auslenkung des Federelements 140 größer und breitet sich dabei insbesondere von dem ersten Ende 142 des Federelements 140 längs der Anlagefläche 208 des Anlageelements 204 in Richtung des zweiten Endes 144 des Federelements 140 aus.

Die Kontaktfläche 212 ist dabei vorzugsweise ununterbrochen und durchgängig ausgebildet, so dass insbesondere eine flächige, gleichmäßige Anlage des Federelements 140 an dem Anlageelement 204 gegeben ist. Dies ermöglicht letztlich eine gleichmäßige Verformung des Federelements 140, um das Federelement 140 möglichst über seine gesamte Länge hinweg fast bis hin zur plastischen Verformungsgrenze gleichmäßig elastisch zu verformen. Die sich hieraus ergebenden Rückstellkräfte bewirken dann die gewünschten hohen Federkräfte eines jeden Federelements 140.

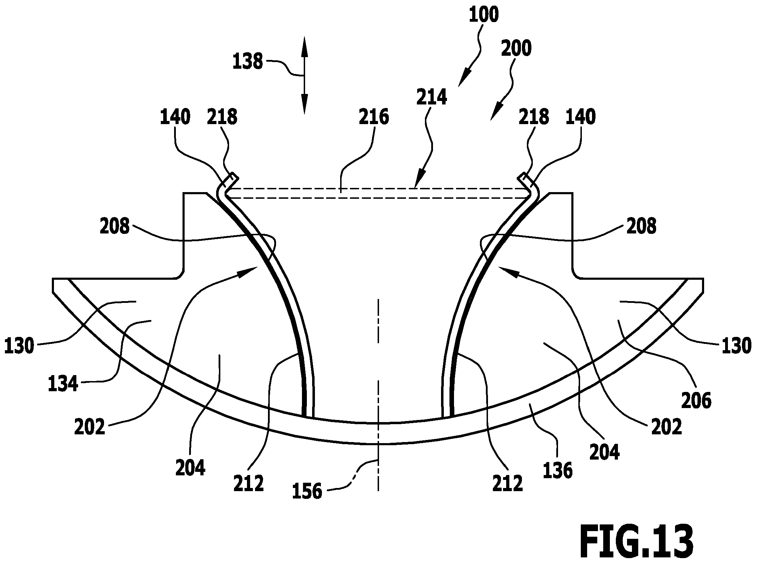

Wie Fig. 13 zu entnehmen ist, kann vorgesehen sein, dass die Verbindungsvorrichtung 100 eine Speichervorrichtung 214 zur Speicherung einer Haltekraft, insbesondere einer Federkraft, umfasst.

Die Speichervorrichtung 214 umfasst insbesondere ein Arretierelement 216, mittels welchem als Halteelemente 218 dienende Federelemente 140 in einem ausgelenkten Zustand arretierbar sind.

Mittels der Speichervorrichtung 214, insbesondere des Arretierelements 216, kann somit eine Vorspannung der Federelemente 140 des Verbindungselements 130 erzielt werden, wodurch die zum Verbinden der beiden Verbindungselemente 130, 132 erforderliche Kraft insbesondere während der Montage der Bauteile 102, 104 minimiert werden kann.

Insbesondere kann vorgesehen sein, dass das Arretierelement 216 mittels des weiteren Verbindungselements 132 betätigt, vorzugsweise entfernt oder zerstört, wird, um die Federelemente 140 freizugeben.

Die Federelemente 140 relaxieren dann insbesondere derart, dass diese das Aufnahmeelement 168 des weiteren Verbindungselements 132 umgreifen und somit die Verbindung zwischen den zwei Verbindungselementen 132 herstellen.

Im Übrigen stimmt die in den Fig. 10 bis 13 dargestellte Ausführungsform der Verbindungsvorrichtung 100 hinsichtlich Aufbau und Funktion mit der in den Fig. 5 bis 9 dargestellten Ausführungsform überein, so dass auf deren vorstehende Beschreibung insoweit Bezug genommen wird.

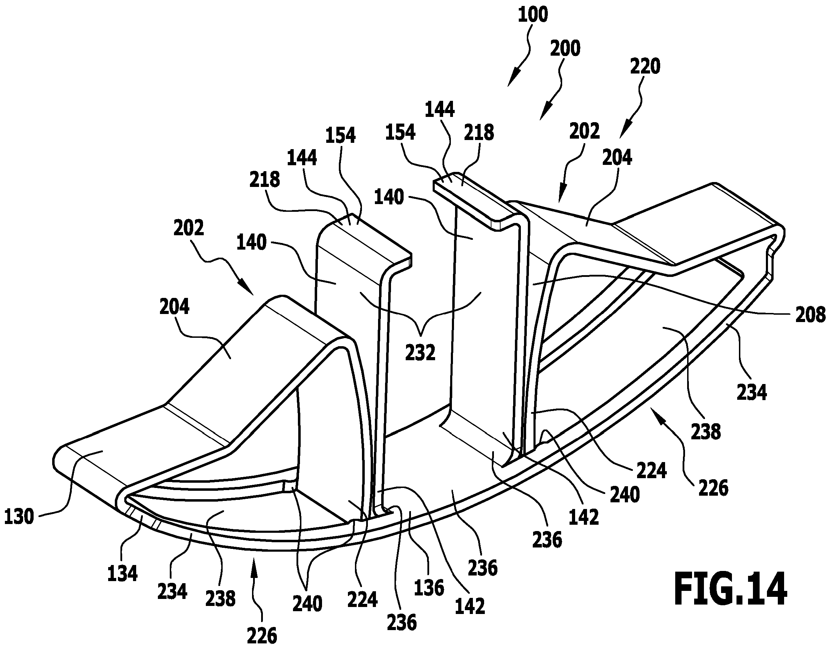

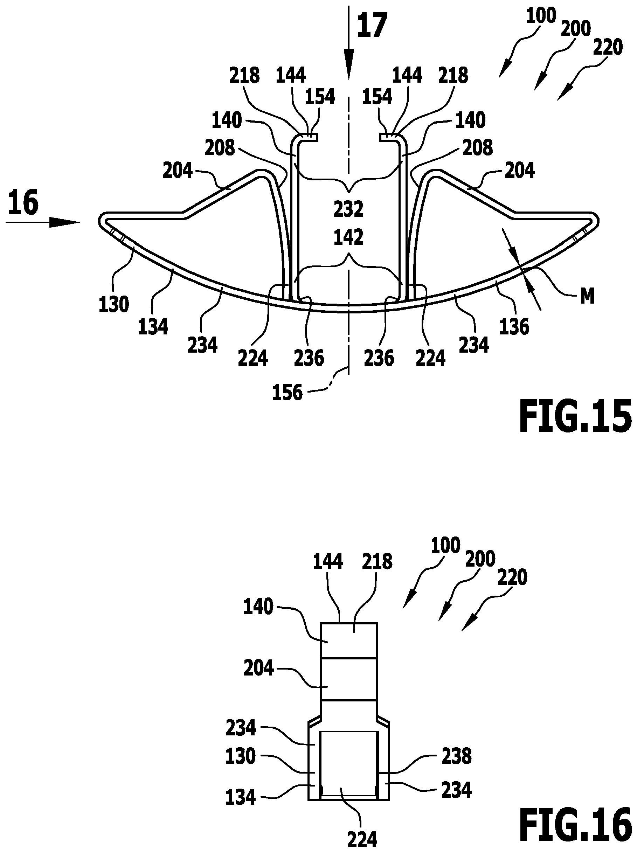

Eine in den Fig. 14 bis 18 dargestellte weitere Ausführungsform einer Verbindungsvorrichtung 100 unterscheidet sich von der in den Fig. 10 bis 13 dargestellten Ausführungsform im Wesentlichen dadurch, dass der Grundkörper 134 des ersten Verbindungselements 130 als ein Blechumformprodukt 220 ausgebildet ist.

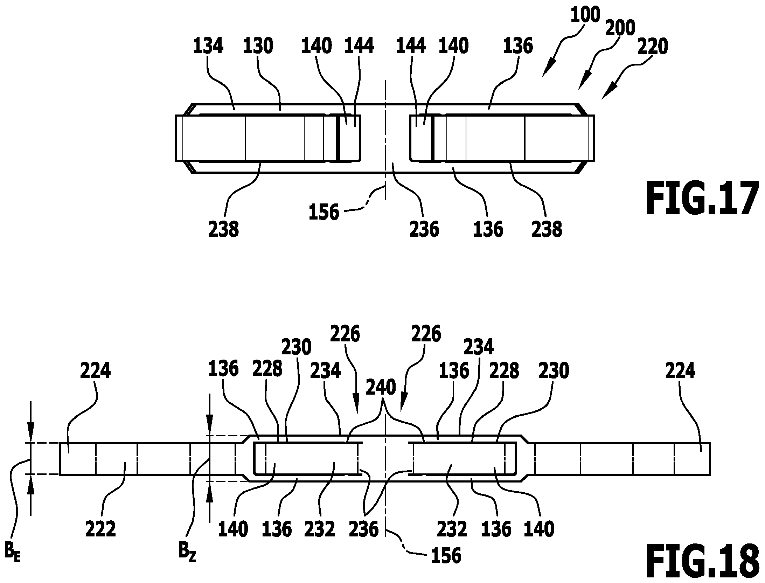

Das Verbindungselement 130 gemäß der in den Fig. 14 bis 18 dargestellten Ausführungsform ist insbesondere aus einem Blechstreifen 222 herstellbar (siehe Fig. 18).

Der Blechstreifen 222 weist dabei beispielsweise eine Materialstärke M (Dicke) von ungefähr 0,8 mm auf.

Der Blechstreifen 222 ist insbesondere im Wesentlichen spiegelsymmetrisch bezüglich einer Quermittelebene 156 ausgebildet.

An den einander gegenüberliegenden Enden 224 des Blechstreifens 222 weist der Blechstreifen 222 vorzugsweise eine Breite B_{E} auf, welche geringer ist als eine Breite B_{Z} in einem zwischen den zwei Enden 224 angeordneten zentralen Abschnitt 226 des Blechstreifens 222.

Der zentrale Abschnitt 226 umfasst insbesondere eine oder mehrere U-förmige Materialausnehmungen 228, insbesondere Stanzungen 230.

Mittels dieser U-förmigen Materialausnehmungen 228 sind insbesondere jeweils ein mittiger Abschnitt 232 und ein den mittigen Abschnitt 232 umgebender Stegabschnitt 234 gebildet.

Die mittigen Abschnitte 232 können insbesondere aus der Ebene des Blechstreifens 222 herausgebogen werden.

Die mittigen Abschnitte 232 bilden dann insbesondere die Federelemente 140.

In einem Übergangsabschnitt 236 bleiben die mittigen Abschnitte 232 mit den Stegabschnitten 234 verbunden.

Die Übergangsabschnitte 236 sind dann insbesondere die ersten Enden 142 eines jeden Federelements 140.

Die zweiten Enden 144 der Federelemente 140 werden beispielsweise abgekantet oder sonst wie umgebogen, um letztlich die Eingriffsabschnitte 154 zu bilden.

Die Stegabschnitte 234 werden insbesondere kreisabschnittsförmig gebogen und bilden dann die Vorsprünge 136, welche in einem Längsschnitt kreisabschnittsförmig sind.

Mittels dieser Vorsprünge 136, welche durch die Stegabschnitte 234 gebildet sind, ist das Verbindungselement 130 somit insbesondere formschlüssig in einer Nut 110 in einem Bauteil 102, 104 festlegbar.

Die Anlageelemente 204 werden durch Umformen der Enden 224 des Blechstreifens 222 gebildet.

Die Enden 224 werden hierzu auf den zentralen Abschnitt 226 des Blechstreifens 222 zurück umgebogen, wobei insbesondere ein gekrümmter Abschnitt eines jeden Endes 224 gebildet wird, welcher die Anlagefläche 208 eines jeden Anlageelements 204 bildet.

Die Enden 224 werden insbesondere in Öffnungen 238 des Blechstreifens 222 eingesteckt oder eingeklemmt. Diese Öffnungen 238 ergeben sich insbesondere durch das Herausbiegen der mittigen Abschnitte 232 aus dem zentralen Abschnitt 226.

Beispielsweise mittels Vorsprüngen 240, welche im Bereich der Stegabschnitte 234 ausgebildet sind und in die Öffnungen 238 hineinragen, kann eine zuverlässige klemmende Festlegung des jeweiligen Endes 224 gewährleistet werden.

Durch die Herstellung des Verbindungselements 130, insbesondere der Federelemente 140 des Verbindungselements 130, aus einem metallischen Material, insbesondere aus Metallblech, kann vorzugsweise gewährleistet werden, dass die Federelemente 140 ihre Federkraft über einen langen Zeitraum hinweg im ausgelenkten Zustand erhalten und somit eine zuverlässige Verbindung zwischen zwei Verbindungselementen 130, 132 bestehen bleibt.

Durch die Kombination von Federelement 140 und Anlageelement 204 kann dabei zugleich mit geringem Material- und Kostenaufwand eine sehr hohe Federkraft erzielt werden.

Im Übrigen stimmt die in den Fig. 14 bis 18 dargestellte Ausführungsform der Verbindungsvorrichtung 100 hinsichtlich Aufbau und Funktion mit der in den Fig. 10 bis 13 dargestellten Ausführungsform überein, so dass auf deren vorstehende Beschreibung insoweit Bezug genommen wird.

### Bezugszeichenliste

- 100: Verbindungsvorrichtung
- 102: Bauteil
- 104: Bauteil
- 106: Kontaktfläche
- 108: Kontaktfläche
- 110: Nut
- 112: Basisabschnitt
- 114: Hinterschneidungsabschnitt
- 116: Dickenrichtung
- 118: Nutgrundfläche
- 120: Grundfläche
- 122: Hinterschneidungsfläche
- 124: Begrenzungsfläche
- 126: Begrenzungswand
- 130: Verbindungselement
- 132: Verbindungselement
- 134: Grundkörper
- 136: Haltevorsprung
- 138: Verbindungsrichtung
- 140: Federelement
- 142: Ende
- 144: Ende
- 146: Auslenkrichtung
- 148: Hauptfederelement
- 150: Hilfsfederelement
- 152: Anlageabschnitt
- 154: Eingriffsabschnitt
- 156: Quermittelebene
- 158: Verstärkungselement
- 166: Verbindungsebene
- 168: Aufnahmeelement
- 170: Ende
- 172: Seitenwandung
- 174: Ausnehmung
- 176: Öffnung
- 178: Aufnahmevorsprung
- 182: Oberfläche
- 184: Spannabschnitt
- 188: Schrägfläche
- 200: Federvorrichtung
- 202: Federeinheit
- 204: Anlageelement
- 206: Kunststoffspritzgussprodukt
- 208: Anlagefläche
- 210: Rastelement
- 211: Hakenelement
- 212: Kontaktfläche
- 214: Speichervorrichtung
- 216: Arretierelement
- 218: Halteelement
- 220: Blechumformprodukt
- 222: Blechstreifen
- 224: Ende
- 226: zentraler Abschnitt
- 228: Materialausnehmung
- 230: Stanzung
- 232: mittiger Abschnitt
- 234: Stegabschnitt
- 236: Übergangsabschnitt
- 238: Öffnung
- 240: Vorsprung
- A: Abstand
- B: Nutbreite
- b: Breite
- h: Höhe
- M: Materialstärke

## Patentansprüche

1. Verbindungsvorrichtung (100) zum Verbinden zweier Objekte, insbesondere zum Verbinden von Möbel- oder Maschinenteilen, wobei die Verbindungsvorrichtung (100) mindestens eine Federvorrichtung (200) aufweist, wobei die mindestens eine Federvorrichtung (200) Folgendes umfasst:
- ein Federelement (140), welches durch elastische Verformung aus einem Ausgangszustand in einen ausgelenkten Zustand bringbar ist;
- ein Anlageelement (204), an welches das Federelement (140) zur Erreichung eines ausgelenkten Zustands des Federelements (140) anlegbar ist,
wobei mindestens ein Ende (144) des Federelements (140) durch elastische Verformung des Federelements (140) relativ zu dem Anlageelement (204) beweglich ist, wobei das Federelement (140) im Ausgangszustand desselben einen in Richtung des relativ zu dem Anlageelement (204) beweglichen Endes (144) des Federelements (140) zunehmenden Abstand (A) von dem Anlageelement (204) aufweist,
**dadurch gekennzeichnet, dass**
bei einem nur teilweisen Relaxieren des Federelements (140), wodurch ein Arretierzustand, Verriegelungszustand und/oder Rastzustand der Federvorrichtung (200) erzielbar ist, das Federelement (140) noch abschnittsweise an dem Anlageelement (204) anliegt.

2. Verbindungsvorrichtung (100) nach Anspruch 1, **dadurch gekennzeichnet, dass** das Federelement (140) im Ausgangszustand desselben einen in Richtung des relativ zu dem Anlageelement (204) beweglichen Endes (144) des Federelements (140) überproportional zunehmenden Abstand (A) von dem Anlageelement (204) aufweist.

3. Verbindungsvorrichtung (100) nach einem der Ansprüche 1 oder 2, **dadurch gekennzeichnet, dass** das Anlageelement (204) eine Anlagefläche (208) zum Anlegen des Federelements (140) umfasst, wobei die Anlagefläche (208) gekrümmt, insbesondere zumindest näherungsweise kreisabschnittsförmig gekrümmt, ausgebildet ist.

4. Verbindungsvorrichtung (100) nach einem der Ansprüche 1 bis 3, **dadurch gekennzeichnet, dass** das Federelement (140) und das Anlageelement (204) einstückig miteinander ausgebildet sind.

5. Verbindungsvorrichtung (100) nach einem der Ansprüche 1 bis 4, **dadurch gekennzeichnet, dass** die Federvorrichtung (200) ein Kunststoffspritzgussprodukt (206) und/oder ein Blechumformprodukt (220) ist oder umfasst.

6. Verbindungsvorrichtung (100) nach einem der Ansprüche 1 bis 5, **dadurch gekennzeichnet, dass** das Federelement (140) mit zunehmender Auslenkung aus dem Ausgangszustand in einer größer werdenden Kontaktfläche (106, 108) unmittelbar an dem Anlageelement (204) anlegbar ist oder anliegt.

7. Verbindungsvorrichtung (100) nach einem der Ansprüche 1 bis 6, **dadurch gekennzeichnet, dass** eine lokale elastische Verformung des Federelements (140) im ausgelenkten Zustand an sämtlichen Stellen längs einer Kontaktfläche (212), in welcher das Federelement (140) und das Anlageelement (204) einander berühren, zumindest näherungsweise identisch ist.

8. Verbindungsvorrichtung (100) nach einem der Ansprüche 1 bis 7, **dadurch gekennzeichnet, dass** das relativ zu dem Anlageelement (204) bewegliche Ende (144) des Federelements (140) ein Rastelement (210) und/oder ein Hakenelement (211) aufweist.

9. Verbindungsvorrichtung (100) nach einem der Ansprüche 1 bis 8, **dadurch gekennzeichnet, dass** die Verbindungsvorrichtung (100) ein Verbindungselement (130, 132) umfasst, welches einen einstückigen Grundkörper (134) aufweist, der die mindestens eine Federvorrichtung (200) umfasst.

10. Verbindungsvorrichtung (100) nach einem der Ansprüche 1 bis 9, **dadurch gekennzeichnet, dass** die Verbindungsvorrichtung (100) ein oder mehrere Verbindungselemente (130, 132) umfasst, welche in einem Verbindungszustand und/oder Verankerungszustand an mindestens einem der Objekte angeordnet sind, wobei mindestens ein Verbindungselement (130, 132) einen oder mehrere nicht-selbstschneidende Haltevorsprünge (136) umfasst, welche jeweils eine gekrümmte Abstützfläche aufweisen, die in einem Längsschnitt kreisbogenförmig ist, wobei der eine oder die mehreren Haltevorsprünge (136) in eine an einem der Objekte vorgesehene Nut (110) mit einer gekrümmten Hinterschneidungsfläche (122), die in einem Längsschnitt kreisbogenförmig ist, einführbar sind,
wobei die Nut einen Basisabschnitt (112) und einen oder mehrere sich in einer Dickenrichtung (116) von dem Basisabschnitt (112) weg erstreckende Hinterschneidungsabschnitte (114) umfasst und
wobei der eine oder die mehreren Haltevorsprünge (136) im Verbindungszustand und/oder Verankerungszustand in den einen oder die mehreren Hinterschneidungsabschnitte (114) der Nut (110) eingreifen.

11. Verbindungsvorrichtung (100) nach einem der Ansprüche 1 bis 10, **dadurch gekennzeichnet, dass** die Verbindungsvorrichtung (100) ein oder mehrere Verbindungselemente (130, 132) zur Anordnung an und/oder in einem ersten Objekt und/oder ein oder mehrere Verbindungselemente (130, 132) zur Anordnung an und/oder in einem zweiten Objekt umfasst, wobei zur Verbindung der Objekte miteinander mindestens ein Verbindungselement (130, 312) an und/oder in dem ersten Objekt mit dem zweiten Objekt, insbesondere mit mindestens einem Verbindungselement (130, 132) an und/oder in dem zweiten Objekt, in Eingriff bringbar ist.

12. Verbindungsvorrichtung (100) nach einem der Ansprüche 1 bis 11, **dadurch gekennzeichnet, dass** die Verbindungsvorrichtung (100) mindestens ein Verbindungselement (130, 132) umfasst, welches ein Halteelement (218) zum Herstellen einer Verbindung zwischen den zwei Objekten und eine Speichervorrichtung (214) zum Speichern einer Halteenergie des Halteelements (218) umfasst, wobei
a) der Speichervorrichtung (214) vor dem Herstellen einer Verbindung zwischen den zwei Objekten Halteenergie zuführbar ist und dass die zugeführte Halteenergie bis zum Herstellen der Verbindung mittels der Speichervorrichtung (214) speicherbar ist; und/oder
b) die Speichervorrichtung (214) beim Herstellen der Verbindung zwischen den zwei Objekten und/oder zum Herstellen der Verbindung zwischen den zwei Objekten betätigbar ist, so dass das Halteelement (218) unter Nutzung der Halteenergie in eine Haltestellung bringbar ist.

13. Verfahren zum Verbinden zweier Objekte, insbesondere von Möbel-oder Maschinenteilen, umfassend Folgendes:
- Bereitstellen einer Verbindungsvorrichtung (100) nach einem der Ansprüche 1 bis 12;
- Anordnen eines Verbindungselements (130, 132) an einem der Objekte oder Einbringen eines Verbindungselements (130, 132) in eines der Objekte;
- Verbinden des Verbindungselements (130, 132) mit dem weiteren Objekt, insbesondere mit einem an und/oder in dem weiteren Objekt angeordneten weiteren Verbindungselement (130, 132).

14. Verfahren zur Herstellung einer Verbindungsvorrichtung (100) nach einem der Ansprüche 1 bis 12, umfassend:
- Bereitstellen eines Blechstreifens (222), welcher mindestens eine U-förmige Materialausnehmung (228), insbesondere Stanzung (230), aufweist, so dass ein von der U-förmigen Materialausnehmung (228), insbesondere Stanzung (230), umgebener mittiger Abschnitt (232) und ein die U-förmige Materialausnehmung (228), insbesondere Stanzung (230), umgebender Stegabschnitt (234) des Blechstreifens (222) gebildet sind;
- Herausbiegen des mittigen Abschnitts (232) zur Ausbildung eines Federelements (140);
- plastisches Umformen des Stegabschnitts (234) derart, dass ein oder zwei seitlich von dem Federelement (140) wegragende Haltevorsprünge (136) gebildet sind, welche in einem Längsschnitt insbesondere kreisabschnittsförmig sind;
- plastisches Umformen eines Endes (224) des Blechstreifens (222) derart, dass das Ende (224) des Blechstreifens (222) auf den Blechstreifen (222) zurück umgebogen und insbesondere an einem Übergangsabschnitt (236) festgelegt wird, wobei der Übergangsabschnitt (236) den mittigen Abschnitt (232) mit dem Stegabschnitt (234) verbindet, wobei ein von dem Übergangsabschnitt (236) wegragender Teil des umgeformten Endes (224) des Blechstreifens (222) gekrümmt ausgebildet wird.

## Claims

1. Connecting device (100) for connecting two objects, in particular for connecting furniture parts or machine parts, the connecting device (100) having at least one spring device (200), the at least one spring device (200) comprising:
- a spring element (140) which can be brought from an initial state into a deflected state by elastic deformation;
- an abutment element (204) which the spring element (140) is able to abut in order to reach a deflected state of the spring element (140),
at least one end (144) of the spring element (140) being movable by elastic deformation of the spring element (140) relative to the abutment element (204), the spring element (140) having, in the initial state thereof, a distance (A) from the abutment element (204) which increases in the direction of the end (144) of the spring element (140), which end is movable relative to the abutment element (204),
**characterized in that** during only partial relaxation of the spring element (140), as a result of which an arresting state, locking state and/or latching state of the spring device (200) can be reached, the spring element (140) still abuts against the abutment element (204) at least in sections.

2. Connecting device (100) according to claim 1, **characterized in that** the spring element (140) has, in the initial state thereof, a distance (A) from the abutment element (204) which increases disproportionately in the direction of the end (144) of the spring element (140), which end is movable relative to the abutment element (204).

3. Connecting device (100) according to either claim 1 or claim 2, **characterized in that** the abutment element (204) comprises an abutment surface (208) for abutting the spring element (140), the abutment surface (208) being curved, in particular curved at least approximately in the shape of a circular segment.

4. Connecting device (100) according to any of claims 1 to 3, **characterized in that** the spring element (140) and the abutment element (204) are integral with one another.

5. Connecting device (100) according to any of claims 1 to 4, **characterized in that** the spring device (200) is or comprises a plastics injection molding product (206) and/or a sheet-metal forming product (220).

6. Connecting device (100) according to any of claims 1 to 5, **characterized in that** the spring element (140) is able to abut or abuts directly against the abutment element (204) with increasing deflection from the initial state in an enlarging contact surface (106, 108).

7. Connecting device (100) according to any of claims 1 to 6,
**characterized in that** a local elastic deformation of the spring element (140) in the deflected state is at least approximately identical at all points along a contact surface (212) in which the spring element (140) and the abutment element (204) touch one another.

8. Connecting device (100) according to any of claims 1 to 7, **characterized in that** the end (144) of the spring element (140), which end is movable relative to the abutment element (204), has a latching element (210) and/or a hook element (211).

9. Connecting device (100) according to any of claims 1 to 8, **characterized in that** the connecting device (100) comprises a connecting element (130, 132) which has a one-piece main body (134) that comprises the at least one spring device (200).

10. Connecting device (100) according to any of claims 1 to 9, **characterized in that** the connecting device (100) comprises one or more connecting elements (130, 132) which are arranged on at least one of the objects in a connection state and/or an anchoring state, at least one connecting element (130, 132) comprising one or more non-self-cutting holding projections (136) which each have a curved support surface that is in the shape of a circular arc in a longitudinal section, it being possible for one or more holding projections (136) to be inserted into a groove (110) which is provided on one of the objects and has a curved undercut surface (122) that is in the shape of a circular arc in a longitudinal section,
the groove comprising a main portion (112) and one or more undercut portions (114) extending away from the main portion (112) in a thickness direction (116), and
one or more holding projections (136) in the connecting state and/or the anchoring state engaging in one or more undercut portions (114) of the groove (110).

11. Connecting device (100) according to any of claims 1 to 10, **characterized in that** the connecting device (100) comprises one or more connecting elements (130, 132) for arranging on and/or in a first object and/or one or more connecting elements (130, 132) for arranging on and/or in a second object, and in order to connect the objects to one another, it being possible for at least one connecting element (130, 312) on and/or in the first object to be brought into engagement with the second object, in particular with at least one connecting element (130, 132) on and/or in the second object.

12. Connecting device (100) according to any of claims 1 to 11, **characterized in that** the connecting device (100) comprises at least one connecting element (130, 132) which comprises a holding element (218) for establishing a connection between the two objects and a storage device (214) for storing a holding energy of the holding element (218),
a) it being possible for the storage device (214) to be supplied with holding energy before a connection between the two objects is established and **in that** the supplied holding energy can be stored by means of the storage device (214) until the connection is established; and/or
b) it being possible for the storage device (214) to be actuated when the connection between the two objects is established and/or for establishing the connection between the two objects, such that the holding element (218) can be brought into a holding position using the holding energy.

13. Method for connecting two objects, in particular furniture parts or machine parts, comprising the following:
- providing a connecting device (100) according to any of claims 1 to 12;
- arranging a connecting element (130, 132) on one of the objects or introducing a connecting element (130, 132) into one of the objects;
- connecting the connecting element (130, 132) to the further object, in particular to a further connecting element (130, 132) arranged on and/or in the further object.

14. Method for producing a connecting device (100) according to any of claims 1 to 12, comprising:
- providing a sheet metal strip (222) which has at least one U-shaped material recess (228), in particular punching (230), such that a middle portion (232) surrounded by the U-shaped material recess (228), in particular punching (230), and a rib portion (234) of the sheet metal strip (222), which rib portion surrounds the U-shaped material recess (228), in particular punching (230), are formed;
- bending out the middle portion (232) to form a spring element (140);
- plastically shaping the rib portion (234) in such a way that one or two holding projections (136) which protrude laterally away from the spring element (140) are formed, which in particular are in the shape of a circular segment in a longitudinal section;
- plastically shaping an end (224) of the sheet metal strip (222) such that the end (224) of the sheet metal strip (222) is folded back on the sheet metal strip (222) and in particular is fixed to a transition portion (236), wherein the transition portion (236) connects the middle portion (232) to the rib portion (234), wherein a part of the shaped end (224) of the sheet metal strip (222), which part protrudes away from the transition portion (236), is curved.

## Revendications

1. Dispositif de liaison (100) pour la liaison de deux objets, en particulier pour la liaison de pièces de meuble ou de machine, dans lequel le dispositif de liaison (100) présente au moins un dispositif à ressort (200), dans lequel l'au moins un dispositif à ressort (200) comprend les éléments suivants :
- un élément de ressort (140), qui peut être amené d'un état initial à un état dévié par déformation élastique ;
- un élément d'appui (204), sur lequel l'élément de ressort (140) peut s'appuyer pour atteindre un état dévié de l'élément de ressort (140),
dans lequel au moins une extrémité (144) de l'élément de ressort (140) est mobile par déformation élastique de l'élément de ressort (140) par rapport à l'élément d'appui (204), dans lequel l'élément de ressort (140) présente, dans l'élément initial de celui-ci, une distance (A) par rapport à l'élément d'appui (204) qui augmente en direction de l'extrémité (144) de l'élément de ressort (140) mobile par rapport à l'élément d'appui (204),
**caractérisé en ce que** lors d'un relâchement uniquement partiel de l'élément de ressort (140), par lequel un état d'arrêt, un état de verrouillage et/ou un état d'encliquetage du dispositif à ressort (200) peut être atteint, l'élément de ressort (140) s'appuie encore par sections sur l'élément d'appui (204).

2. Dispositif de liaison (100) selon la revendication 1, **caractérisé en ce que** l'élément de ressort (140), dans l'état initial de celui-ci, présente une distance (A) par rapport à l'élément d'appui (204) qui augmente de manière disproportionnée en direction de l'extrémité (144) de l'élément de ressort (140) mobile par rapport à l'élément d'appui (204).

3. Dispositif de liaison (100) selon l'une des revendications 1 ou 2, **caractérisé en ce que** l'élément d'appui (204) comprend une surface d'appui (208) pour l'appui de l'élément de ressort (140), dans lequel la surface d'appui (208) est conçue courbée, en particulier courbée au moins approximativement en forme de segment de cercle.

4. Dispositif de liaison (100) selon l'une des revendications 1 à 3, **caractérisé en ce que** l'élément de ressort (140) et l'élément d'appui (204) sont conçus d'une seule pièce l'un avec l'autre.

5. Dispositif de liaison (100) selon l'une des revendications 1 à 4, **caractérisé en ce que** le dispositif à ressort (200) est ou comprend un produit moulé par injection en plastique (206) et/ou un produit de déformation de tôle (220).

6. Dispositif de liaison (100) selon l'une des revendications 1 à 5, **caractérisé en ce que** l'élément de ressort (140) peut s'appuyer ou s'appuie directement sur l'élément d'appui (204) avec une déviation croissante depuis l'état initial dans une surface de contact de plus en plus grande (106, 108).

7. Dispositif de liaison (100) selon l'une des revendications 1 à 6, **caractérisé en ce qu'**une déformation élastique locale de l'élément de ressort (140) dans l'état dévié est au moins approximativement identique au niveau de tous les endroits le long d'une surface de contact (212), dans laquelle l'élément de ressort (140) et l'élément d'appui (204) se touchent mutuellement.

8. Dispositif de liaison (100) selon l'une des revendications 1 à 7, **caractérisé en ce que** l'extrémité (144) de l'élément de ressort (140) mobile par rapport à l'élément d'appui (204) présente un élément d'encliquetage (210) et/ou un élément de crochet (211).

9. Dispositif de liaison (100) selon l'une des revendications 1 à 8, **caractérisé en ce que** le dispositif de liaison (100) comprend un élément de liaison (130, 132), lequel présente un corps de base en une seule pièce (134), qui comprend l'au moins un dispositif à ressort (200).

10. Dispositif de liaison (100) selon l'une des revendications 1 à 9, **caractérisé en ce que** le dispositif de liaison (100) comprend un ou plusieurs éléments de liaison (130, 132), lesquels sont agencés dans un état de liaison et/ou dans un état d'ancrage au niveau d'au moins un des objets, dans lequel au moins un élément de liaison (130, 132) comprend une ou plusieurs saillies de retenue non autotaraudeuses (136), lesquelles présente respectivement une surface de support courbée, qui est en forme d'arc de cercle dans une coupe longitudinale, dans lequel la ou les plusieurs saillies de retenue (136) peuvent être introduites dans une rainure (110) prévue sur un des objets avec une surface de contre-dépouille courbée (122), qui est en forme d'arc de cercle dans une coupe longitudinale,
dans lequel la rainure comprend une section de base (112) et une ou plusieurs sections de contre-dépouille (114) s'étendant dans une direction d'épaisseur (116) à l'écart de la section de base (112) et
dans lequel la ou les plusieurs saillies de retenue (136) viennent en prise, dans l'état de liaison et/ou l'état d'ancrage dans la ou les plusieurs sections de contre-dépouille (114) de la rainure (110).

11. Dispositif de liaison (100) selon l'une des revendications 1 à 10, **caractérisé en ce que** le dispositif de liaison (100) comprend un ou plusieurs éléments de liaison (130, 132) pour l'agencement au niveau et/ou dans un premier objet et/ou un ou plusieurs éléments de liaison (130, 132) pour l'agencement au niveau et/ou dans un second objet, dans lequel pour la liaison des objets entre eux, au moins un élément de liaison (130, 312) au niveau et/ou dans le premier objet peut être mis en prise avec le second objet, en particulier avec au moins un élément de liaison (130, 132) au niveau et/ou dans le second objet.

12. Dispositif de liaison (100) selon l'une des revendications 1 à 11, **caractérisé en ce que** le dispositif de liaison (100) comprend au moins un élément de liaison (130, 132), lequel comprend un élément de retenue (218) pour l'établissement d'une liaison entre les deux objets et un dispositif de stockage (214) pour le stockage d'une énergie de retenue de l'élément de retenue (218), dans lequel
a) de l'énergie de retenue peut être fournie au dispositif de stockage (214) avant l'établissement d'une liaison entre les deux objets et **en ce que** l'énergie de retenue fournie peut être stockée jusqu'à l'établissement de la liaison au moyen du dispositif de stockage (214) ; et/ou
b) le dispositif de stockage (214) peut être actionné, lors de l'établissement de la liaison entre les deux objets et/ou pour l'établissement de la liaison entre les deux objets, de sorte que l'élément de retenue (218) peut être amené dans une position de retenue en utilisant l'énergie de retenue.

13. Procédé de liaison de deux objets, en particulier de pièces de meuble ou de machine, comprenant les étapes suivantes :
- fourniture d'un dispositif de liaison (100) selon l'une des revendications 1 à 12 ;
- agencement d'un élément de liaison (130, 132) au niveau d'un des objets ou introduction d'un élément de liaison (130, 132) dans un des objets ;
- liaison de l'élément de liaison (130, 132) avec l'autre objet, en particulier avec un autre élément de liaison (130, 132) agencé au niveau et/ou dans l'autre objet.

14. Procédé de production d'un dispositif de liaison (100) selon l'une des revendications 1 à 12, comprenant :
- la fourniture d'une bande de tôle (222), laquelle présente au moins un évidement de matériau (228) en forme de U, en particulier un estampage (230), de sorte qu'une section médiane (232) entourant l'évidement de matériau (228) en forme de U, en particulier l'estampage (230) et une section de nervure (234) de la bande de tôle (222) entourant l'évidement de matériau (228) en forme de U, en particulier l'estampage (230) sont formées ;
- l'extraction par flexion de la section médiane (232) pour la formation de l'élément de ressort (140) ;
- la déformation plastique de la section de nervure (234) de sorte qu'une ou deux saillies de retenue (136) s'écartant latéralement de l'élément de ressort (140) sont formées, lesquelles sont en particulier en forme de segment de cercle dans une coupe longitudinale ;
- la déformation plastique d'une extrémité (224) de la bande de tôle (222) de sorte que l'extrémité (224) de la bande de tôle (222) est repliée en arrière sur la bande de tôle (222) et en particulier fixée sur une section de transition (236), dans lequel la section de transition (236) relie la section médiane (232) à la section de nervure (234), dans lequel une partie s'écartant de la section de transition (236) de l'extrémité déformée (224) de la bande de tôle (222) est formée courbée.
